(19) Europäisches Patentamt
European Patent Office
Office européen des brevets

(11) EP 1 266 686 B1

(12) EUROPEAN PATENT SPECIFICATION

(45) Date of publication and mention of the grant of the patent:
**27.04.2005 Bulletin 2005/17**

(21) Application number: **01904507.9**

(22) Date of filing: **16.02.2001**

(51) Int Cl.[7]: **B01J 20/26**, B01J 20/28, C08F 2/44, C08F 2/46, C08F 2/18, C08F 20/18, C08F 20/28, C09K 3/00, B01J 20/32, A61K 33/08, A61M 1/36, A61K 9/14, A61K 47/48, B01D 15/00, C01G 43/00, C02F 1/42, C08G 73/02, C08F 26/10

(86) International application number:
**PCT/JP2001/001122**

(87) International publication number:
**WO 2001/060513 (23.08.2001 Gazette 2001/34)**

# (54) HYDROPHOBIC SUBSTANCE ADSORBENTS

HYDROPHOBE ADSORBERSUBSTANZEN

ADSORBANTS DE SUBSTANCES HYDROPHOBES

(84) Designated Contracting States:
**DE ES FR GB IT**

(30) Priority: **16.02.2000 JP 2000038470**
**16.02.2000 JP 2000038472**
**16.02.2000 JP 2000038473**

(43) Date of publication of application:
**18.12.2002 Bulletin 2002/51**

(73) Proprietor: **SEKISUI CHEMICAL CO., LTD.**
**Osaka-shi, Osaka 530-8565 (JP)**

(72) Inventors:
- **OISHI, Kazuyuki**
**Tokuyama-shi, Yamaguchi 745-0872 (JP)**
- **KAWABE, Toshiki**
**Shiga-gun, Shiga 520-0513 (JP)**

(74) Representative: **Müller-Boré & Partner Patentanwälte**
**Grafinger Strasse 2**
**81671 München (DE)**

(56) References cited:
**JP-A- 6 312 136**
**JP-A- 58 032 164**
**JP-A- 62 089 633**
**JP-A- 63 160 669**
**US-A- 4 340 483**
**US-A- 4 658 002**
**US-A- 4 973 469**
**US-A- 5 185 313**
**US-A- 5 374 600**

- **PATENT ABSTRACTS OF JAPAN vol. 018, no. 601 (C-1274), 16 November 1994 (1994-11-16) & JP 06 228216 A (DAINIPPON INK & CHEM INC), 16 August 1994 (1994-08-16)**
- **PATENT ABSTRACTS OF JAPAN vol. 017, no. 647 (C-1135), 2 December 1993 (1993-12-02) & JP 05 209017 A (MITSUBISHI PETROCHEM CO LTD), 20 August 1993 (1993-08-20)**
- **PATENT ABSTRACTS OF JAPAN vol. 011, no. 242 (C-438), 7 August 1987 (1987-08-07) & JP 62 048725 A (AGENCY OF IND SCIENCE & TECHNOL), 3 March 1987 (1987-03-03)**
- **PATENT ABSTRACTS OF JAPAN vol. 010, no. 245 (C-368), 22 August 1986 (1986-08-22) & JP 61 074580 A (NIPPON ZENYAKU KOGYO KK), 16 April 1986 (1986-04-16)**

EP 1 266 686 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to the use of a hydrophobic substance adsorbent capable of efficiently adsorbing hydrophobic substances in samples, in particular to the use of a hydrophobic substance adsorbent capable of most efficiently adsorbing hormonally active agents, polycyclic aromatic hydrocarbons and volatile organic compounds.

Various hazardous hydrophobic substances are contained in environmental samples, for example environmental water including waste water, soil, and atmosphere. The initial concentrations of these hazardous hydrophobic substances in large amounts of such environmental samples are generally low. However, when existing in environmental samples for a long period of time, they are concentrated at places where the degree of their diffusion is low, such as on the surface of solid substances in the environmental samples, or as a result of concentration in living organisms, and thus exert great influences on the ecosystem. Therefore, it causes a serious problem to allow them to occur in large quantities of environmental samples even if they occur in low concentrations.

Among such hazardous hydrophobic substances, there are organism-derived or synthetic steroid hormones and certain chemicals discharged into the environment which, when taken up by living organisms, show hormone-like activities. These chemicals are called endocrine disrupting chemicals and have now been known to exert adverse influences on the reproductive functions of animals even with a very small amount. These steroid hormones and hormonally active agents (hereinafter collectively referred to as "hormonally active agents") are discharged by humans in many cases and it is therefore necessary to remove them efficiently in the process of their discharge treatment.

On the other hand, volatile organic substances, such as trichloroethylene, which are used in large quantities in various industrial processes, are substances suspected of carcinogenicity and are said to be causative of pollution as a result of leaching from industrial waste water into groundwater and soil. Among these volatile organic compounds, there are some used in construction materials and so forth owing to their antiseptic effects and there is a fear of their adversely affecting inhabitants.

Further, polycyclic aromatic hydrocarbons, such as benzopyrene, are substances which are contained in exhaust gases from various household or industrial combustion chambers, in particular exhaust gas from automobiles, and are suspected of carcinogenicity. Their occurrence at high concentrations in environmental atmosphere is regarded as a problem. As regards these substances as well, it is necessary to remove them in the process of discharging and from the environment since their direct influences on the human body are serious.

Technologies utilizing various polymeric carriers as hydrophobic substance adsorbents have been disclosed as general methods of efficiently removing various hazardous substances contained in environmental samples at low concentrations. Widely used as the polymeric carriers are activated carbon, zeolite and the like. Among the drawbacks of these inorganic adsorbents for the adsorption of hydrophobic substances as pointed out, there are the difficulty in treating them for recycling, the danger of firing, and the high costs.

On the other hand, synthetic polymer carriers are excellent hydrophobic substance adsorbents free of the drawbacks mentioned above.

JP-A-06 228216 describes an adsorbent material prepared from (A) a carboxylic group-containing (meth) acrylate, (B) a monomer and/or an oligomer crosslinkable by application of energy rays and (C) a water-soluble compound compatible with the components (A) and (B), but incompatible with the polymer synthesized by the application of energy rays. JP-A-05 209017 describes the preparation of an oil, perfume, insecticides, and fungicides adsorbing polymer comprising the copolymerisation of methacrylic esters, vinyl monomers and of a crosslinking agent. US-A-5 185 313 describes an adsorbing agent for metals and proteins having a structure P-D-L, wherein P is an organic and hydrophilic polymer such as polysaccharide, polyvinylalcohol, polyacrylamide, polyacrylester, polyethyleneimide or derivatives thereof, D is a cross-linking bridge connecting P with a ligand L comprising one or more heteroaromatic ring systems. JP-A-63 160669 describes a low-density lipoprotein adsorbent which comprises aluminum containing pores with an average pore diameter being in the range of 1000 A to 5000 A. US-A-4 973 469 describes a controlled release formulation comprising an adsorbate of a mixture of a pharmaceutically useful active ingredient and an inactive substance absorbed on a cross-linked polymer. JP-A-62 048725 describes a resin suitable for the adsorption and recovery of trace metallic ion dissolved in seawater, which is produced by (1) reacting (A) a cross-linked polyethylenimine polymer obtained e.g. by the graft-polymerization of polyethyleneimine to cross-linked polystyrene, etc., with (B) an acrylic acid ester e.g. in a dispersing medium (e.g. water) to obtain a polyethyleneimine derivative having propionic acid ester residue on the side chain, (2) suspending the product in a solvent containing hydroxylamine and (3) reacting at a temperature between room temperature and the boiling point of the solvent for 1 to 5 days. JP-A-61 074580 describes a carrier for cell adhesion consisting of a hydrophilic and porous synthetic adsorbent having low ion exchange capability, e.g. a porous styrene-divinylbenzene polymer or porous methacrylate polymer, etc. having hydrophilic property improved by a coating with a cell adhesion intermediate such as fibronectine, cell-originated glycoprotein etc., polyvinyl-type rigid hydrophilic porous polymer having ion exchange capability blocked with the coating with a cell adhesion intermediate, or porous polymer of cross-linked Poval, acrylic ester polymer, etc.. US-A-4,658,002 describes adsorbents prepared by polymerization of N-vinylcarboxamide, acrylamide, methacrylamide, acrylic acid, methacrylic

acid, acrylates, methacrylates and/or a vinyl ester and (b) from 0.1 to 10% by weight, based on the total amount of monomers, as a crosslinking agent, a compound which possesses at least two ethylenically unsaturated double bonds, e.g. alkylmethacrylate.

As typical synthetic polymer carriers for adsorption for environmental water samples, there may be mentioned styrenic polymers. For instance, (1) Japanese Kokai Publication Sho-59-147606 discloses hydrophobic substance adsorbents comprising a styrene-divinylbenzene polymer with a specified degree of crosslinking, pore volume and surface area and intended for the adsorption of alcohols, organic acids and like water-soluble organic substances.

Further, (2) Japanese Kokai Publication Hei-02-43948 discloses hydrophobic substance adsorbents intended for the adsorption of surfactants, colorants and bad-smelling components in aqueous liquids and comprising a styrenic copolymer obtained by polymerization of 99 to 90 weight % of divinylbenzene and a styrenic monomer and 1 to 10 weight % of a water-soluble monomer.

However, the adsorbents mentioned above under (1) and (2) are intended for the adsorption of water-soluble substances, and nothing is mentioned about the adsorption of hydrophobic substances. These styrenic polymers contain raw material-derived aromatic compounds in considerable amounts, and it is difficult to thoroughly remove them by washing, for instance. The residual aromatic compounds may possibly be eluted into waste water. Furthermore, styrenic polymers are highly hydrophobic, hence may possibly adsorb hydrophobic substances irreversibly. Therefore, it is difficult to desorb the hydrophobic substances adsorbed and reuse the hydrophobic substance adsorbents. Further, styrenic polymers readily adsorb organic solvents themselves and, therefore, it is impossible to reuse the hydrophobic substance adsorbents by desorbing the adsorbates with organic solvents.

Furthermore, according to (1), it is alleged that when the degree of crosslinking, pore volume, surface area and other physical properties of the adsorbents are precisely controlled, the adsorbents can display their unique performances. However, to control these factors, it is necessary to select polymerization conditions; this is very troublesome. In addition, the reproducibility in the production process is very low as compared with the case where these physical properties are not controlled.

On the other hand, acrylic polymers may be mentioned as adsorbent carriers other than styrenic polymers. For example, (3) Japanese Kokai Publication Hei-09-168737 discloses carriers for surfactant adsorption which are crosslinked polymers having a polyoxyalkylene chain. However, the carriers disclosed in (3) are low in degree of crosslinking, hence low in mechanical strength. It is difficult to treat large volumes of samples with them or use them repeatedly.

Further, (4) Japanese Kokai Publication Hei-09-192653 discloses hydrophobic substance adsorbents for chlorine-containing organic solvents which comprise a methyl (meth)acrylate polymer or copolymer in addition to a styrene polymer. However, these polymers are non-crosslinked polymers, so that they are poor in mechanical strength, like the above-mentioned (3), and it is difficult to treat large volumes of samples or use them repeatedly.

Furthermore, (5) Japanese Kokai Publication Hei-06-312135 discloses carriers for the adsorption of water-soluble substances medium or high in molecular weight which comprise a polymer whose main component is a (meth) acrylic acid ester. The polymers (5) are highly crosslinked ones and, therefore, they are considered to have sufficient mechanical strength. However, no mention is made therein of their ability to adsorb hydrophobic substances. The polymers (5) are obtained by energy radiation polymerization, so that there is the possibility of an unreacted monomer remaining. These can hardly be removed by washing. Moreover, since a monomer and a phase separating agent, which have a structure similar to that of a hormonally active agent, are used as raw materials for polymerization, it is considered that the hormonally active agents may possibly be eluted from the product polymer. They cannot be used for the purpose of removing these substances.

On the other hand, as other technologies of removing hydrophobic substances, in particular hormonally active agents, in exhaust gases, in particular, for example of removing dioxins, in addition to the above-mentioned prior art technologies, there may be mentioned, among others, (6) a method disclosed in Japanese Kokai Publication Hei-11-104488 which consists in adsorption on an activated carbon powder, (7) a method disclosed in Japanese Kokai Publication Hei-10-151342 which uses an inorganic porous adsorbent such as a silicic acid compound, (8) a method disclosed in Japanese Kokai Publication Hei-10-249160 which consists in adsorption on a hydrophobic substance adsorbent whose main component is zeolite, (9) a method disclosed in Japanese Kokai Publication Hei-10-328533 which consists in adsorption on a titanium oxide powder, and (10) a method disclosed in Japanese Kokai Publication 2000-42361 which uses a hydrophobic substance adsorbent comprising a lipophilic substance carried on an inorganic carrier such as activated carbon.

It has long been known that porous inorganic materials, typically activated carbon, such as the ones used in the above methods (6) to (9), can adsorb various substances. However, because of their strong adsorbability, it has been difficult to treat the hydrophobic substance adsorbents for recycling or treat them for recovering adsorbates. Further, the danger of firing in the step of elevated temperature treatment in the process of recovery or incineration treatment has been pointed out, as mentioned above. A further problem is that such inorganic substances as activated carbon, zeolite and titanium oxide are expensive and difficult to recycle, as mentioned above, so that the treatment

cost increases.

The method (10) utilizes the high solubility of dioxins in oily substances and improves the capacity for adsorbing dioxins by causing an oily substance to stick to an inorganic carrier. However, the oily substance is only physically adhering to the carrier, so that it is readily removed and the adsorption capacity readily varies accordingly; this is a drawback. In addition, since the carrier is an inorganic one such as activated carbon, the method has the same drawbacks as mentioned above.

As for the method of adsorbing and removing phthalic acid esters, which are hormonally active agents, from atmosphere, there is a method disclosed in (11) Japanese Kokai Publication Hei-10-249189 which uses a cyanoalkyl group-bound material as a hydrophobic substance adsorbent. The method according to (11) uses a hydrophobic substance adsorbent derived from a substrate comprising an inorganic material, such as silica gel, which is used as a packing for liquid chromatography, or a synthetic polymer, such as polyethylene or polystyrene, by chemical modification with a cyanoalkylsilyl group. In (11), however, any method for that chemical modification is not described but, generally, such a chemical modification reaction is inferior in quantitativeness and the substrate readily interacts with an adsorbent. Further, a complicated process is required for such chemical modification.

On the other hand, it is reported that hormonally active agents in the environment or living organism samples show endocrine disrupting activities even when they occur in trace amounts. Therefore, it is very important to establish expedient and highly precise methods of assaying these substances. The methods so far disclosed are gas chromatography (GC) methods, liquid chromatography (HPLC) methods, combinations of these methods with mass spectrometric (MS) analysis methods, and immunological methods based on the antigen-antibody reaction, among others.

In these highly precise methods of analysis, test specimens are prepared by almost the same pretreatment procedure. This pretreatment is carried out for the purpose of removing substances interfering with assays from extracts from atmosphere, exhaust gases, environmental water or environmental substances, which extracts contain contaminants in large amounts, or from biological samples such as blood, urine and tissues, so that the target hormonally active agents occurring in trace amounts can be efficiently extracted and concentrated. Therefore, the assay results are greatly influenced by this pretreatment procedure.

As a most commonly used method of pretreatment, there is the solid-phase extraction method. This method comprises contacting a sample with a carrier such as a polymer to thereby cause the assay target component substance to be adsorbed on the carrier, removing other interfering components by washing and then desorbing the thus-adsorbed target substance with another solvent for subjecting the same to the assay processes mentioned above.

As the carrier to be used in solid phase extraction, there may generally be mentioned, among others, styrene-divinylbenzene carriers and 2-vinylpyrrolidone-divinylbenzene carriers described in (12) LC GC, 15 (2) 152-158, 1997 and divinylbenzene-acrylic acid ester copolymers described in (13) Japanese Kokai Publication Hei-06-258203.

However, the above-mentioned carriers for solid phase extraction as described in (12) are shown to be useful mainly in extracting medicinal or biological components but no mention is made therein of examples of extraction of hormonally active agents. On the other hand, it is shown in (13) that the above polymers are to be used in extracting agrochemicals, but nothing is mentioned about other substances than agrochemicals. Thus, the quantitativeness and reproducibility have been matters of concern. Furthermore, the carriers according to (12) and (13) have a problem in that components interfering with assays are eluted therefrom in assaying substances occurring in trace amounts. This is caused by the use of benzene ring-containing compounds as raw materials of the polymer carriers, namely by the fact that the carriers contain styrenic monomers as essential components. It is a problem that such components can hardly be removed by a washing procedure or the like.

As discussed above, hydrophobic substance adsorbents capable of adsorbing hydrophobic substances, allowing them to be desorbed and allowing no elution of interfering components are required for assaying or removing hydrophobic substances occurring in the environment or in biological samples, in particular trace amounts of hormonally active agents, polycyclic aromatic hydrocarbons or volatile organic compounds. However, no technologies capable of satisfying these conditions have been disclosed so far.

In view of the above-mentioned state of the art, it is an object of the present invention to provide the use of a hydrophobic substance adsorbent capable of adsorbing hydrophobic substances, in particular hormonally active agents, polycyclic aromatic hydrocarbons or volatile organic compounds, with high efficiency, allowing them to be desorbed with ease and, furthermore, preventing these substances from being eluted.

The present invention provides the use of a hydrophobic substance adsorbent comprising a crosslinked polymer obtainable by polymerizing a crosslinkable monomer and a non-crosslinkable monomer, for adsorbing a hormonally active agent, a polycyclic aromatic hydrocarbon or a volatile organic compound, wherein said crosslinkable monomer comprises at least one member selected from the group consisting of crosslinkable monomers represented by the following general formulas I to III:

$$A\text{-}X\text{-}A \qquad \text{I}$$

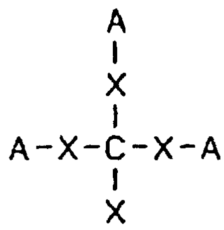

· · · II

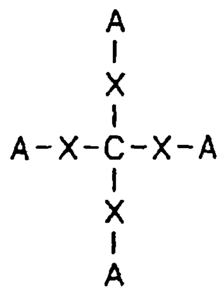

· · · III

in the formulas, A represents a (meth)acryloyl group, and X represents an alkyl chain, alkylene chain or oxyalkylene chain containing 1 to 24 carbon atoms and any hydrogen atom of X may be substituted by a methyl or hydroxyl group, and

when a (meth)acrylic acid ester is used as said non-crosslinkable monomer, the non-crosslinkable monomer is used in an amount of 0 to 20 weight parts per 100 weight parts of said crosslinkable monomer, and

when a monomer other than (meth)acrylic acid esters is used as said non-crosslinkable monomer, the non-crosslinkable monomer other than (meth)acrylic acid esters is used in an amount of 0 to 20 weight parts per 100 weight parts of the total amount of the (meth)acrylic acid ester monomers (sum of the crosslinkable monomer and non-crosslinkable monomer).

The crosslinkable monomer represented by the above general formula I is preferably an alkyleneglycol di (meth)acrylate.

The hydrophobic substance adsorbent according to the use of the present invention preferably comprises a crosslinked polymer obtainable by polymerizing only one crosslinkable monomer alone as selected from among acrylic acid esters and methacrylic acid esters, or

a crosslinked polymer obtainable by copolymerizing two or more crosslinkable monomers selected from among acrylic acid esters and methacrylic acid esters, with one of the crosslinkable monomers subjected to copolymerization accounting for at least 90 weight % of the total crosslinkable monomers.

The hydrophobic substance adsorbent used according to the invention preferably has an average pore volume of 0.0001 to 0.1 mL/g, a specific surface area of 0.01 to 10 $m^2$/g, an average pore diameter of 0.1 to 30 nm and, a coefficient of variation (CV value) of particle size distribution within the range of 1 to 40.

The hydrophobic substance adsorbent used according to the present invention is capable of adsorbing a hormonally active agent, polycyclic aromatic hydrocarbons or a volatile organic compound.

The above-mentioned hormonally active agent or the polycyclic aromatic hydrocarbon preferably comprises at least one member selected from the group consisting of alkylphenols, bisphenol A, phthalic acid esters, dioxins, polychlorinated biphenyls, estrogens, and benzo[a]pyrene.

A packing for liquid chromatography for assaying a hormonally active agent in which the hydrophobic substance adsorbent is used according to the present invention also constitutes an aspect of the present invention.

In a still further aspect, the present invention consists in the use of the hydrophobic substance adsorbent as defined above in a method of assaying a hormonally active agent using a liquid chromatography apparatus constituted at least of a liquid feeding pump, a sample injection device, a precolumn, a separation column and a detector,

said precolumn is a column packed with the hydrophobic substance adsorbent, and

which method comprises at least the adsorption step of injecting a sample at least once into said precolumn to thereby cause said hormonally active agent in the sample to be adsorbed on said precolumn and the step of desorbing the hormonally active agent adsorbed on said precolumn and introducing the substance into the separation column.

Fig. 1 is a schematic representation of an example of the liquid chromatography apparatus in an embodiment of the invention.

Fig. 2 is a schematic representation of another example of the liquid chromatography apparatus in an embodiment of the invention.

Fig. 3 is a representation of a chromatogram obtained by carrying out assaying of a standard solution containing bisphenol A and nonylphenol.

Fig. 4 is a representation of a chromatogram obtained by carrying out assaying of an eluate fraction derived from the hydrophobic substance adsorbent obtained in Example 1.

Fig. 5 is a representation of a chromatogram obtained by carrying out assaying of an eluate fraction derived from the hydrophobic substance adsorbent obtained in Comparative Example 1.

Fig. 6 is a representation of the results of assaying of BPA and NP using the packing of Example 15.

Fig. 7 is a representation of the results of assaying of phthalic acid esters using the packing of Example 15.

Fig. 8 is a representation of the results of assaying of BPA and NP using the packing of Comparative Example 8.

Fig. 9 is a representation of the results of assaying of phthalic acid esters using the packing of Comparative Example 8.

In the figures, 1 stands for an eluent, 2 for an eluent feeding pump, 3 for a sample injection device, 4 for a precolumn, 5 for a separation column, 6 for a detector, 7 for a switching valve, 8 for a drain, 11 for a bisphenol A peak, 12 for a nonylphenol peak, 13 for a diethyl phthalate peak, 14 for a di-n-butyl phthalate peak, 15 for a di-n-hexyl phthalate peak, and 16 for a di-2-ethylhexyl phthalate peak.

In the following, the present invention is described in detail.

The hydrophobic substance adsorbent used according to the present invention comprises a crosslinked polymer obtainable by polymerizing a crosslinkable monomer and a non-crosslinkable monomer.

The crosslinkable monomer to be used in the practice of the present invention comprises an acrylic acid ester and/or a methacrylic acid ester (hereinafter collectively referred to also as "(meth)acrylic acid ester").

The (meth)acrylic acid ester comprises at least one member selected from the group consisting of crosslinkable monomers represented by the general formulas I to III given above.

In the general formulas I to III, A represents an acryloyl group [$CH_2$=CH-CO-] or a methacryloyl group. X represents an alkyl chain [($C_nH_{2n+1}$)-] containing 1 to 24 carbon atoms, an alkylene chain [-$(CH_2)_n$-] containing 1 to 24 carbon atoms or an oxyalkylene chain containing 1 to 24 carbon atoms. The term "oxyalkylene chain" as used herein means an alkylene chain containing an arbitrary number of ether oxygen (-O-) atoms in that chain and/or at one or both termini thereof. Any hydrogen atom in these chains may be substituted by a methyl or hydroxyl group.

As the (meth)acrylic acid ester represented by the above general formula I, there may be mentioned, among others such as alkyleneglycol di(meth)acrylates, ethyleneglycol di(meth)acrylate, diethyleneglycol di(meth)acrylate, triethyleneglycol di(meth)acrylate, tetraethyleneglycol di(meth)acrylate, polyethyleneglycol di(meth)acrylate, propyleneglycol di(meth)acrylate, dipropyleneglycol di(meth)acrylate, tripropyleneglycol di(meth)acrylate, polypropyleneglycol di(meth)acrylate, and polytetramethyleneglycol di(meth)acrylate; 1,3-butyleneglycol di(meth)acrylate, 1, 4-butyleneglycol di(meth)acrylate, 1, 6-hexanediol di(meth)acrylate, 1, 9-nonanediol di(meth)acrylate, neopentyl glycol di (meth)acrylate, 2-hydroxy-1, 3-di(meth)acryloxypropane, 2-hydroxy-1-acryloxy-3-methacryloxypropane, glycerol di (meth)acrylate, glycerol acrylate methacrylate, 1,10-di(meth)acryloxy-4,7-dioxadecane-2,9-diol, 1,10-di(meth)acryloxy-5-methyl-4,7-dioxadecane-2,9-diol, 1,11-di(meth)acryloxy-4, 8-dioxaundecane-2, 6, 10-triol and the like. Among them, alkyleneglycol di(meth)acrylates are preferred.

As the (meth)acrylic acid ester represented by the above general formula II, there may be mentioned, among others, trimethylolethane tri(meth)acrylate, trimethylolpropane tri(meth)acrylate, tetramethylolpropane tri(meth)acrylate, tetramethylolmethane tri(meth)acrylate and the like.

As the (meth)acrylic acid ester represented by the above general formula III, there may be mentioned, among others, tetramethylolmethane tetra(meth)acrylate and the like.

These (meth)acrylic acid esters may be used singly or two or more of them may be used in combination.

In producing the hydrophobic substance adsorbent used according to the present invention, a non-crosslinkable monomer is used as part of the constituent units in addition to the above crosslinkable monomer.

The non-crosslinkable monomer referred to above is not particularly restricted but, for example, a (meth) acrylic acid ester or the like is suited for use.

The above-mentioned (meth)acrylic acid ester includes, among others, alkyl (meth)acrylates such as methyl (meth)acrylate, ethyl (meth)acrylate, propyl (meth)acrylate, butyl (meth)acrylate, lauryl (meth)acrylate and stearyl (meth)acrylate; hydroxymethyl (meth)acrylate, hydroxyethyl (meth)acrylate, methoxydiethyleneglycol (meth)acrylate, methoxypolyethyleneglycol (meth)acrylate and the like. These may be used singly or two or more of them may be used in combination.

As regards other non-crosslinkable monomers than the above-mentioned (meth)acrylic acid esters, they are not particularly restricted but include those other than the monomers mentioned below under (a) to (d). Thus, for example, triallyl cyanurate and triallyl isocyanurate may be mentioned.

The crosslinked polymer, which constitutes the hydrophobic substance adsorbent used according to the present invention, is preferably a crosslinked polymer obtainable by polymerizing a crosslinkable monomer, which is

a (meth)acrylic acid ester, alone, more preferably a crosslinked polymer obtainable by polymerizing a crosslinkable monomer represented by the above general formulas I to III alone, still more preferably a crosslinked polymer obtainable by polymerizing a crosslinkable monomer represented by the above general formula I alone.

The hydrophobic substance adsorbent used according to the present invention is preferably constituted of a crosslinked polymer obtainable by polymerizing only one crosslinkable monomer selected from among the (meth) acrylic acid esters

The hydrophobic substance adsorbent used according to the present invention may be constituted of a crosslinked polymer obtainable by copolymerizing two or more crosslinkable monomers selected from among the (meth)acrylic acid esters mentioned above. In that case, however, it is preferred that one of the crosslinkable monomers to be subjected to copolymerization account for at least 90 weight % of the total crosslinkable monomers. In this case, such proportion is calculated without taking the impurity contained in the monomers to be polymerized into consideration.

When a (meth)acrylic acid ester is used as said non-crosslinkable monomer, the non-crosslinkable monomer is used in an amount of 0 to 20 weight parts, preferably 0 to 10 weight parts, per 100 weight parts of the said crosslinkable monomer.

When a monomer other than (meth)acrylic acid esters is used as the said non-crosslinkable monomer, the non-crosslinkable monomer other than (meth)acrylic acid esters is used in an amount of 0 to 20 weight parts, preferably 0 to 10 weight parts, per 100 weight parts of the total amount of the (meth)acrylic acid ester monomers (sum of the crosslinkable monomer and non-crosslinkable monomer).

The following monomer groups (a) to (d) are not suited for use as the compounds constituting the hydrophobic substance adsorbents used according to the present invention:

(a) Benzene ring-containing monomers, linear, cyclic or branched aliphatic monomers

The above monomers (a) include, among others, styrenic monomers such as styrene, α-methylstyrene and divinylbenzene; olefin monomers such as ethylene and propylene; diene monomers such as butadiene; (meth) acrylic acid esters such as phenoxyethyl (meth)acrylate, phenoxypolyethyleneglycol (meth)acrylate, and dimethyloltricyclodecane di(meth)acrylate.

These benzene ring-containing monomers and linear, cyclic or branched aliphatic monomers are strong in hydrophobicity and it is difficult to desorb the hydrophobic substances adsorbed. Further, since the polymers comprising these monomers readily adsorb organic solvents, they adsorb the organic solvents used in desorption treatment, so that quantitative desorption cannot be attained. Furthermore, impurities in these materials exert adverse effects on the step of desorption.

(b) Ion exchanging function group-containing monomers

The monomers (b) include, among others, carboxyl group-containing monomers such as (meth)acrylic acid and itaconic acid; tertiary or quaternary amino group-containing monomers such as 2-diethylaminoethyl (meth) acrylate; and monomers having an ion exchanging functional group such as a sulfonic acid group. These monomers are not preferred since their ion exchanging groups reduce the adsorption performance of the hydrophobic substance.

(c) Halogen group-containing monomers

Monomers having a halogen group such as chlorine or bromine group are not suited for use since they are highly hydrophobic, like the monomers (b) mentioned above, and make desorption treatment difficult.

(d) Monomers similar in structure to hormonally active agents

As the monomers (d), there may be mentioned, for example, 2,2-bis{4-[(meth)acryloxyethoxy]phenyl}propane, 2,2-bis{4-[(meth)acryloxy-diethoxy]phenyl}propane and 2,2-bis{4-[(meth)acryloxy-polyethoxy]phenyl}propane, which have a bisphenol A structure; nonylphenoxypolyethyleneglycol (meth)acrylate and nonylphenoxypolypropyleneglycol (meth)acrylate, which have an alkylphenol structure; and phthalic acid hydroxyethyl (meth)acrylate, which has a phthalic acid ester-like structure.

Those monomers which are similar in structure to hormonally active agents are undesirable since when the resulting polymers are used as hydrophobic substance adsorbents, unpolymerized portions of those monomers may possibly be eluted.

The crosslinked polymer to be used in the hydrophobic substance adsorbent used according to the present invention is not particularly restricted in form but may have any form provided that it can come into contact with liquid or gaseous samples. Thus, for example, mention may be made of granular, fibrous, filter and other forms. Among them, granular form is preferred.

The size of the hydrophobic substance adsorbent used according to the present invention is not particularly restricted but may appropriately be selected depending on the conditions of use. In case of granular form, the average particle diameter is preferably 0.1 μm to 50 mm, more preferably 1 to 20 mm. Furthermore, in case where the adsorbent

used according to the present invention is used in pretreatment for assaying a hydrophobic substance, for instance, the average particle diameter is preferably 1 to 500 μm, more preferably 10 to 200 μm. In another example in which the adsorbent is used for removing a hydrophobic substance from a sample in large size treatment, the size is preferably 100 μm to 50 mm, more preferably 500 μm to 20 mm, most preferably 1 to 10 mm. Outside this range, it becomes difficult to handle samples while using the adsorbent.

The hydrophobic substance adsorbent used according to the present invention preferably has an average pore volume of 0.0001 to 0.1 mL/g. When it is less than 0.0001 mL/g, the production and physical properties control thereof are difficult and the production reproducibility may become poor in certain instances and, when it exceeds 0.1 mL/g, the mechanical strength will decrease and the adsorption performance may decrease in large scale treatment or repeated use. Furthermore, outside the above range, swelling or shrinking may occur, leading to decreased reproducibility in adsorption performance in certain instances.

The said average pore volume can be determined with ease by applying the BET method utilizing the adsorption of an inert gas or the mercury porosimetric method to the hydrophobic substance adsorbent in a dried state.

The hydrophobic substance adsorbent used according to the present invention preferably has a specific surface area of 0.01 to 10 $m^2$/g. When it is less than 0.01 $m^2$/g, the production and physical properties control become difficult and the production reproducibility becomes poor in certain instances and, when it exceeds 10 $m^2$/g, the pore size must be increased, with the result that the mechanical strength decreases and the adsorption performance may decrease in large scale treatment or repeated use. Furthermore, swelling or shrinking may occur, unfavorably leading to decreased reproducibility in adsorption performance in certain instances. The range of 0.02 to 8 $m^2$/g is more preferred and the range of 0.05 to 7 $m^2$/g is still more preferred.

The above-mentioned specific surface area can be determined with ease by applying the BET method utilizing the adsorption of an inert gas or the mercury porosimetric method to the hydrophobic substance adsorbent in a dried state.

The hydrophobic substance adsorbent used according to the present invention preferably has an average pore diameter of 0.1 to 30 nm. When it is smaller than 0.1 nm, the production and physical properties control become difficult and the production reproducibility becomes poor in certain instances and, when it exceeds 30 nm, the mechanical strength decreases and the adsorption performance may decrease in large scale treatment or repeated use. Furthermore, swelling or shrinking thereof may occur, unfavorably leading to decreased reproducibility in adsorption performance in certain instances. The range of 0.5 to 25 nm is more preferred and the range of 1 to 20 nm is still more preferred.

The average pore diameter can be determined with ease by the BET method utilizing the adsorption of an inert gas or the mercury porosimetric method.

The hydrophobic substance adsorbent used according to the present invention preferably has a coefficient of variation (CV value) of particle size distribution of 1 to 40. The coefficient of variation (CV value) of particle size distribution can be calculated based on the average particle diameter and standard deviation in particle size distribution as determined by particle size measurement as follows:

$$\text{Coefficient of variation (CV value) of particle size distribution} = (\text{standard deviation in particle size distribution}) / (\text{average particle diameter}) \times 100 \qquad (I)$$

When the CV value is less than 1, the production and physical properties control become difficult and the production reproducibility becomes poor in certain instances and, when it exceeds 40, the occurrence of microparticles may readily cause clogging, hence the durability becomes poor. Furthermore, the adsorption reproducibility may become poor due to the variation in surface area from particle to particle. A value of 2 to 30 is more preferred.

As the method of adjusting the coefficient of variation (CV value) of particle size distribution, there may be mentioned, for example, the method comprising preparing only a crosslinked polymer that will give a CV value within the desired range or classifying the polymer after polymerization so as to give a CV value within the desired range, when the hydrophobic substance adsorbent is prepared by suspension polymerization, as mentioned later herein.

As the method of preparing only a crosslinked polymer that will give a CV value within the desired range, there may be mentioned, for example, the method which comprises adjusting the amount of a monomer to be used or the amount of dispersant, or selecting the shape of the polymerization reaction vessel and stirring blade, or selecting the stirring conditions such as the rate of stirring.

As the method of classifying the crosslinked polymer after polymerization so as to give a CV value within the desired range, there may be mentioned, for example, the method comprising dispersing the polymer in an appropriate

good solvent and subjecting the resulting slurry to classification by sedimentation or sieving, or the method comprising adjusting the particle size distribution in a dry state by sieving or using an air classifier.

The hydrophobic substance adsorbent used according to the present invention preferably has a density of 0.5 to 3.0 g/$cm^3$. A density outside this range is inadequate for the handling in use, in particular in handling large amounts of samples. A more preferred range is 0.7 to 2.0 g/$cm^3$.

The porous structure of the hydrophobic substance adsorbent used according to the present invention is not particularly restricted but may be a microporous structure or a macroporus structure provided that the porosity is sufficient for the form to be maintained in the environment in which the adsorbent is used. The adsorbent may also be a foam.

Under special conditions, the hydrophobic substance adsorbent used according to the present invention may have a covered structure whose surface layer is formed of a polymer of the above-mentioned monomer. In that case, the material of the covered core portion is not particularly restricted but it is required that the core portion be made of a material strong enough for the form of the adsorbent to be retained in the environment in which the adsorbent is used and incapable of allowing any hydrophobic material to be eluted out therefrom.

The term "hydrophobic substance" as used herein means any substance having a solubility in water of not higher than 10 g/L, in particular not higher than 1 g/L, among hydrophobic substances contained in a liquid or gaseous sample.

The hydrophobic substances to be adsorbed on the hydrophobic substance adsorbent used according to the present invention are hormonally active agents, polycyclic aromatic hydrocarbons and volatile organic compounds.

The hormonally active agents so referred to herein include organism-derived or synthetic steroid hormones, substances reported to manifest hormonally activity in vivo and substances suspected of hormonally activity, including the so-called endocrine disrupting chemicals.

The above-mentioned hormonally active agents are not particularly restricted but include, among others, dioxins, inclusive of coplanar PCBs and brominated dioxins; polychlorinated biphenyls; alkylphenols such as 4-tert-butylphenol, 4-n-heptylphenol, nonylphenol and 4-tert-octylphenol; bisphenol A; 2,4-dichlorophenol; phthalic acid esters such as dicyclohexyl phthalate, butyl benzyl phthalate, di-2-ethylhexyl phthalate, diheptyl phthalate, di-n-butyl phthalate, diethyl phthalate and dimethyl phthalate; di-2-ethylhexyl adipate; such aromatic compounds as benzo[a]pyrene, benzophenone, 4-nitrotoluene, styrene, styrene dimer and styrene trimer; estrogens such as estradiol, estrone and estriol; and agrochemicals such as DDT.

The above-mentioned polycyclic aromatic hydrocarbons are not particularly restricted but includes all known polycyclic aromatic hydrocarbons, such as pyrene, benzo[a]pyrene, benzanthracene, methylcholanthrene, fluorene, anthracene, phenanthrene, benzofluoranthene, 1-pyrenol; sulfur-containing hydrocarbons such as benzothiophene and dibenzothiophene; nitrated hydrocarbons such as naphthalenedinitropyrene and nitropyrene.

Preferred among them as hormonally active agents or polycyclic aromatic hydrocarbons are alkylphenols, bisphenol A, phthalic acid esters, dioxins, polychlorinated biphenyls, estrogens, and benzo[a]pyrene.

The above-mentioned volatile organic compounds are not particularly restricted but include, among others, aliphatic hydrocarbons such as hexane, heptane, octane, decane, 2,2,4-trimethylpentane, and butadiene; aromatic hydrocarbons such as benzene, toluene, xylene, ethylbenzene, and 1,3,5-trimethylbenzene; terpenes such as α-pinene and limonene; halogenated hydrocarbons such as trichloroethylene, tetrachloroethylene, trichloromethane, 1,1,1-trichloroethane, 1,2-dichloroethane, 1,2-dichloropropane, and tetrachloromethane; and esters such as butyl acetate.

The hydrophobic substance adsorbent used according to the present invention is particularly suited for use as a hydrophobic substance adsorbent against dioxins, polychlorinated biphenyls, 4-tert-butylphenol, nonylphenol, 4-tert-octylphenol, bisphenol A, di-2-ethylhexyl phthalate, diheptyl phthalate, di-n-butyl phthalate, benzo[a]pyrene, benzophenone, 4-nitrotoluene, styrene, estradiol, estrone, estriol, DDT, hexane, heptane, octane, toluene, xylene, ethylbenzene, 1,3,5-trimethylbenzene, α-pinene, limonene, tetrachloroethylene, tetrachloromethane, pyrene, anthracene, phenanthrenes, among others.

The samples containing these hydrophobic substances are not particularly restricted but include, among others, liquids, gases, or extracts from solids such as various kinds of environmental water, atmosphere, and biological components.

The hydrophobic substance adsorbent used according to the present invention can be obtained by carrying out the polymerization reaction using the above-mentioned monomer in the presence of a polymerization initiator.

The above-mentioned polymerization reaction is not particularly restricted but any of the polymerization methods known in the art can be used, for example the suspension polymerization method, dispersion polymerization method and emulsion polymerization method. Among them, the suspension polymerization method is preferably used because of procedural simplicity. The use of energy beam polymerization such as ultraviolet polymerization as the above polymerization method is undesirable. This is because the polymer production equipment is complicated and the polymerization efficiency is low, so that elution of an unpolymerized component may possibly occur during use of the

hydrophobic substance adsorbent.

In producing the hydrophobic substance adsorbent used according to the present invention by the suspension polymerization method, for instance, the polymerization reaction can be carried out by dispersing the above-mentioned polymerizable monomer and an initiator in an aqueous dispersion medium prepared by dissolving a water-soluble dispersant in water and, after further addition of an additive and so forth, if necessary, raising the temperature with stirring under a nitrogen atmosphere. As such a production process, there may be mentioned, for example, the process comprising the step of preparing a suspension by dispersing an oil-soluble mixture in an aqueous solution of a dispersant and the step of warming the suspension to thereby carry out the suspension polymerization reaction to obtain a crosslinked polymer. On that occasion, the oil-soluble mixture preferably comprises the monomer and polymerization initiator alone.

The above-mentioned dispersant is not particularly restricted but may be any of those known in the art, for example synthetic polymers such as polyvinyl alcohol and polyvinylpyrrolidone; cellulose derivatives; water-soluble polymers such as gelatin and starch; inorganic salts such as hydroxyapatite, calcium phosphate, calcium hydroxide, and calcium carbonate; and various surfactants. Among them, water-soluble polymers are preferred and, in particular, nonionic water-soluble polymers such as polyvinyl alcohol and polyvinylpyrrolidone are preferred.

It is not desirable to use a surfactant as a dispersant which may possibly be eluted from the hydrophobic substance adsorbent after polymerization. For example, when a hydrophobic substance adsorbent for use in adsorbing nonylphenols, which are hormonally active agents, is to be prepared, the use of a surfactant having the nonylphenol structure should be avoided. This is because nonylphenol-like substances contained in the residual surfactant may possibly be eluted during use of the adsorbent. Further, the residual surfactant interferes with the interaction between the hydrophobic substance adsorbent and the hydrophobic substance.

As the dispersion medium for the above aqueous dispersant solution, there may be mentioned, among others, water, alcohols, ketones and like water-soluble organic solvents; toluene, hexane and like water-insoluble organic solvents, and mixtures of these. Among them, water or a mixed solvent composed of water and an organic solvent is suited for use.

The concentration of the above-mentioned aqueous dispersant solution is not particularly restricted but preferably is 0.01 to 30 weight %, although it may vary depending on the monomer used and the amounts thereof, the desired particle size of the hydrophobic substance adsorbent and other factors. When it is lower than 0.01 weight %, the dispersing effect can hardly be produced. When it exceeds 30%, the viscosity becomes excessively high, making efficient stirring difficult to attain. A more preferred range is 0.1 to 20 weight %.

In preparing a hydrophobic substance adsorbent with a average particle diameter of about 1 to 10 mm, the concentration of the dispersant in the dispersion medium is more preferably 0.0001 to 0.01 weight part per 100 weight parts of the dispersion medium while satisfying the ratio of 0.01 to 0.1 weight part per 100 weight parts of the total amount of the monomer.

As the said monomer, there may be mentioned the crosslinkable monomers and non-crosslinkable monomers described above.

The concentration of the monomer relative to the above-mentioned aqueous dispersant solution is preferably 5 to 100 weight %. When it is below 5 weight %, the production efficiency is low. When it exceeds 100 weight %, aggregates may readily be formed. A more preferred range is 10 to 70 weight %.

The above-mentioned polymerization initiator is not particularly restricted but may be any of those water-soluble or oil-soluble radical polymerization initiators known in the art. As such initiators, there may be mentioned, among others, persulfuric acid salts such as potassium persulfate, sodium persulfate, and ammonium persulfate; organic peroxides such as cumene hydroperoxide, benzoyl peroxide, lauroyl peroxide, octanoyl peroxide, o-chlorobenzoyl peroxide, acetyl peroxide, tert-butyl hydroperoxide, tert-butyl peroxyacetate, tert-butyl peroxyisobutyrate, 3,5,5-trimethylhexanoyl peroxide, tert-butyl peroxy-2-ethylhexanoate, and di-tert-butyl peroxide; and azo compounds such as 2,2'-azobisisobutyronitrile, 2,2'-azobis(2,4-dimethylvaleronitrile), 4,4'-azobis(4-cyanopentanoic acid), 2,2'-azobis (2-methylbutyronitrile), and azobiscyclohexanecarbonitrile.

The above polymerization initiator is used preferably in an amount of 0.05 to 4 weight parts per 100 weight parts of the crosslinkable monomer mentioned above. When the amount is smaller than 0.05 weight part, the polymerization reaction may proceed only to an unsatisfactory extent or a long period of time may be required for the completion of polymerization and, when it exceeds 4 weight parts, the reaction may proceed abruptly, possibly causing formation of aggregates. A more preferred range is 0.08 to 3 weight parts.

In the process for producing the hydrophobic substance adsorbent used according to the present invention, a suspension is prepared by adding an oil-soluble mixture containing the above-mentioned monomer and initiator to the above-mentioned aqueous dispersant solution, followed by stirring. The method of addition is not particularly restricted but, preferably, the addition is made under temperature conditions not initiating the polymerization reaction while stirring the aqueous dispersant solution.

The above suspension is preferably stirred and it is recommended that a measure be taken to promote the

polymerization reaction. The measure to promote the polymerization reaction includes such means as sealing in or bubbling with an inert gas; and addition of a water-soluble substance for modifying the dispersion medium conditions, for example for pH adjustment.

In carrying out the above polymerization, an additive known in the art may be added. As such additives, there may be mentioned, for example, a porosity increasing agent (phase separation agent) for making the polymer porous with pores of large sizes, a chain transfer agent, a pH adjusting agent, a specific gravity modifier and so forth.

Usable as the above porosity increasing agent are, for example, alcohols such as isoamyl alcohol and octanol; aliphatic hydrocarbons such as hexane, heptane, and octane; and aromatic hydrocarbons such as benzene, toluene, and xylene.

Alkyl esters such as methyl caprate, methyl laurate and diisobutyl adipate, among others, cannot be used as the said porosity increasing agent. If these remain in the hydrophobic substance adsorbent, they themselves as well as contaminants therein may possibly be eluted on the occasion of assay, waste water treatment or exhaust gas treatment.

The above porosity increasing agent is used preferably in an amount of not more than 300 weight parts, more preferably not more than 250 weight parts, per 100 weight parts of the total monomer.

The above specific gravity modifier is preferably added in preparing particles having a particle diameter of not less than 1 mm. As the above specific gravity modifier, there may be mentioned, among others, inorganic salts such as sodium chloride, potassium chloride, sodium phosphate, and potassium phosphate; and organic solvents such as alcohols and aromatic hydrocarbons.

These specific gravity modifiers are preferably added in a manner such that the whole amount or part of the specific gravity modifier to be finally added to the polymerization system is added after the start of warming of the polymerization system but before completion of the polymerization reaction. The temperature of the polymerization system at the time of addition is preferably about 45 to 100°C, although it may vary depending on the polymerization conditions. The proportion of the specific gravity modifier to be added after the start of warming of the polymerization system is preferably 10 to 100%, more preferably 20 to 80%, of the total amount to be added. The specific gravity modifier to be added to the polymerization system prior to the start of warming and the specific gravity modifier to be added after the start of warming of the polymerization system may be the same or different. The method of addition is not critical.

While the reaction conditions of the above-mentioned suspension polymerization may vary depending on the monomer and polymerization initiator to be used, the reaction is preferably carried out at a polymerization temperature of 20 to 100°C for 0.5 to 50 hours.

After polymerization, the resulting crosslinked polymer is washed and dried, whereby a hydrophobic substance adsorbent used according to the present invention is obtained.

The above washing is repeated a plurality of times using an organic solvent. Preferably, the polymer is washed with a plurality of times using a plurality of organic solvents.

The organic solvent to be used for the above washing is not particularly restricted but include, among others, alcohols such as methanol and ethanol; and other organic solvents known in the art, such as acetone, although these are used depending on the monomer used.

The hydrophobic substance adsorbent used according to the present invention can be prepared also by any of the molding methods known in the art, for example by injection molding, extrusion molding, or blow molding, using, as a raw material, the polymer obtained by polymerization of the above-mentioned monomer or monomer mixture.

The hydrophobic substance adsorbent used according to the present invention efficiently adsorbs hydrophobic substances, in particular hormonally active agents, polycyclic aromatic hydrocarbons or volatile organic compounds and allows these to be desorbed with ease and, at the same time, it is a hydrophobic substance adsorbent showing only a low level of elution of substances similar to those mentioned above. Therefore, it can be used advantageously in all fields of utilization in which the step of adsorbing hydrophobic substances is included. For example, it can suitably be used as a hydrophobic substance adsorbent for solid phase extraction in the pretreatment for assaying hydrophobic substances in the environment or in living organism components, or as a hydrophobic substance adsorbent for purifying exhaust gases from incineration processes or various production processes or for purifying the environmental atmosphere in general, or for purifying waste water, inclusive of sewage water and industrial waste water, lake or marsh water, river water, seawater or like environmental water, or living organisms, thus for removing hydrophobic substances in samples. The range of application thereof is not limited to the uses mentioned above, however.

The hydrophobic substance adsorbent used according to the present invention can be recycled for reuse. That it "can be recycled" means that the hydrophobic substances adsorbed can be desorbed from the hydrophobic substance adsorbent upon recycling treatment, whereby the hydrophobic substance adsorbent restores its ability to adsorb hydrophobic substances, more specifically, at least 90% of its initial adsorbability, upon recycling treatment.

The method of recycling treatment to the hydrophobic substance adsorbent used according to the present invention is not particularly restricted but may be any of those methods by which the hydrophobic substances can be

desorbed from the hydrophobic substance adsorbent, such as the chemical method comprising passing a desorbing solvent differing in physical properties from the solvent in adsorption and the physical treatment method comprising warming or ultrasonic treatment, for instance.

The above desorbing solvent may be a solvent differing in physical properties such as pH or salt concentration from the adsorption solvent or a solvent differing in solubility of targets of adsorption, namely hydrophobic substances, from the adsorption solvent. As such, there may be mentioned, among others, alcohols such as methanol and ethanol; ketones such as acetone; alkanes such as hexane; and various buffer solutions.

The above recycling treatment step may be incorporated in a series of waste water or exhaust gas treatment steps as a part thereof or may be carried out separately.

The use of a hydrophobic substance adsorbent of the present invention as defined above in a packing comprising in liquid chromatography for assaying hormonally active agents also constitutes an aspect of the present invention.

The hydrophobic substance adsorbent used according to the present invention, when packed in a column, can be used as a packing for liquid chromatography for assaying hormonally active agents.

This packing comprises the hydrophobic substance adsorbent mentioned above and, as for the form thereof, it preferably occurs as spherical or nearly spherical particles with an average particle diameter of 0.1 to 1,000 $\mu$m.

The above column is not particularly restricted provided that any hormonally active agent will not be eluted therefrom. Thus, it is preferably made of glass, stainless steel, or a resin, for instance.

The method of packing the hydrophobic substance adsorbent used according to the present invention in the column is not particularly restricted but may be any of the methods known in the art, for example the dry method and wet method. The wet slurry method is preferred among others.

The liquid chromatography apparatus in which the above packing is to be used is an apparatus known in the art. Thus, for example, it is constituted of a liquid feeding pump, sample injection device, column thermostat, and detector, among others.

The use of the hydrophobic substance as defined above in a method of assaying a hormonally active agent in which a liquid chromatography apparatus constituted at least of a liquid feeding pump, a sample injection device, a precolumn, a separation column and a detector, with the precolumn packed with the hydrophobic substance adsorbent used according to the present invention, and which method comprises at least the adsorption step of injecting a sample at least once into the precolumn to thereby cause a hormonally active agent in the sample to be adsorbed on the precolumn and the step of desorbing the hormonally active agent adsorbed on the precolumn and introducing the substance into the separation column also constitutes an aspect of the present invention.

The adsorbent for use in the precolumn in the assay method is constituted of the hydrophobic substance adsorbent mentioned hereinabove and preferably is in the form of spherical or nearly spherical particles, preferably with an average particle diameter of 0.1 to 1,000 $\mu$m.

The liquid chromatography apparatus in which the hydrophobic substance adsorbent used according to the present invention in the precolumn is constituted, for example, of at least a liquid feeding pump 2, a sample injection device 3, a precolumn 4, a separation column 5, and a detector 6, as shown in Fig. 1.

The above precolumn 4 may be always connected with the sample injection device 3 and separation column 5, as shown in Fig. 1, or may be disposed so that it may be connected to the sample injection device 3 and separation column 5 by switching over by means of a switching valve 7 disposed on the channel, as shown in Fig. 2.

The above-mentioned liquid feeding pump 2, sample injection device 3 and detector 6 may be ones known in the art, respectively. Attachments used in the conventional liquid chromatography apparatus may also be used. As such attachments, there may be mentioned, for example, a controller, column thermostat, degassing device, and gradienter. By connecting such devices to one another as shown in Fig. 1 or Fig. 2, for instance, it is possible to assay a hormonally active agent.

In the assay method using the above-mentioned liquid chromatography apparatus, the hydrophobic substance adsorbent used according to the present invention is used in the precolumn in the liquid chromatography apparatus. Such assay method has at least the adsorption step of injecting a sample at least once into the precolumn to thereby cause a hormonally active agent in the sample to be adsorbed on the precolumn. The injection may be carried out using a conventional sample injection device. After injection, other substances than the hormonally active agent are discharged, together with sample solution, from the precolumn by means of an eluent. This discharged liquid may be discharged through the separation column connected to the precolumn or, as shown in Fig. 2, may be discharged out of the channel by means of the switching valve 7. It is also possible to automate these operations by means of a program.

The eluent to be used in the above step of adsorption is not particularly restricted but may be any of conventional eluent compositions capable of dissolving the sample containing the hormonally active agent and allowing the hormonally active agent to be adsorbed on the precolumn. As such eluent, there may be mentioned, among others, water; an inorganic acid, such as phosphoric acid, nitric acid, hydrochloric acid or perchloric acid, or a salt thereof; buffer solutions containing an organic acid, such as succinic acid, maleic acid, citric acid or acetic acid, or a salt thereof;

alcohols such as methanol, ethanol and isopropanol; organic solvents such as acetonitrile, acetone, dioxane, dichloromethane and hexane; and mixtures of these.

To the above eluent, there may be further added one or more of the additives known in the art. Such additives are not particularly restricted but include, among others, acids such as hydrochloric acid and nitric acids; bases such as sodium hydroxide and potassium hydroxide; salts such as sodium chloride, potassium chloride and sodium sulfate; and antiseptics such as sodium azide. These may be used in an admixture. A plurality of eluents may also be used.

The assay method using the above-mentioned liquid chromatography includes, in addition to the above adsorption step, the step of desorbing the hormonally active agent adsorbed on the precolumn and introducing the hormonally active agent into the separation column. In this desorption step, the interaction between the hydrophobic substance adsorbent used according to the present invention and the hormonally active agent is dissolved and the hormonally active agent is transferred by the eluent to the separation column. This dissolution of the interaction can be carried out, for example, by eluent changeover or by varying the precolumn temperature. The method involving eluent changeover is simple and preferred among others. The eluent to be used in the desorption step is not particularly restricted but may be any one having a composition enabling desorption of the hormonally active agent. It can appropriately be selected from among the eluent compositions mentioned above.

Usable as the separation column which is a constituent of the above liquid chromatography apparatus are columns packed with a packing known in the art to be capable of separating hydrophobic substances. As such packing, there may be mentioned, among others, synthetic polymer packings comprising an inorganic or acrylic acid ester copolymer having a hydrophobic group such as an octyl, octadecyl or phenyl group.

The following examples illustrate the present invention in further detail. These examples are, however, by no means limitative of the scope of the present invention.

<Preparation of hydrophobic substance adsorbents>

(Example 1)

Benzoyl peroxide (1.0 g; polymerization initiator; product of Kishida Chemical) was dissolved in 500 g of triethyleneglycol dimethacrylate (product of Shin-Nakamura Chemical). The solution was dispersed in 2,500 mL of a 4 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent.

The above hydrophobic substance adsorbent was measured for particle diameter using Coulter Multisizer (product of Coulter). The average particle diameter was 20.2 μm.

(Example 2)

A hydrophobic substance adsorbent was prepared in the same manner as in Example 1 except that 500 g of 2-hydroxy-1,3-dimethacryloxypropane was used in lieu of 500 g of triethyleneglycol dimethacrylate used in Example 1. The hydrophobic substance adsorbent was measured for particle diameter in the same manner as in Example 1. The average particle diameter was 45.8 μm.

(Example 3)

Benzoyl peroxide (1.0 g) was dissolved in a mixture of 450 g of ethyleneglycol dimethacrylate (product of Shin-Nakamura Chemical) and 50 g of tetramethylolmethane triacrylate (product of Shin-Nakamura Chemical). The solution was dispersed in 2,500 mL of a 2 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent.

The hydrophobic substance adsorbent was measured for particle diameter in the same manner as in Example 1. The average particle diameter was 36.0 μm.

(Example 4)

A hydrophobic substance adsorbent was prepared in the same manner as in Example 1 except that 450 g of triethyleneglycol dimethacrylate and 50 g of methyl methacrylate were used in lieu of 500 g of triethyleneglycol dimethacrylate used in Example 1. The hydrophobic substance adsorbent was measured for particle diameter in the same

manner as in Example 4. The average particle diameter was 970.1 µm.

(Example 5)

Benzoyl peroxide (1.0 g; polymerization initiator; product of Kishida Chemical) and 500 g of triethyleneglycol dimethacrylate (product of Shin-Nakamura Chemical) were dissolved in 200 g of isoamyl alcohol (porosity increasing agent). The solution was dispersed in 2,500 mL of a 3 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent. The hydrophobic substance adsorbent was measured for particle diameter in the same manner as in Example 1. The average particle diameter was 75.2 µm.

(Example 6)

Benzoyl peroxide (1.0 g; polymerization initiator; product of Kishida Chemical) was dissolved in a mixture of 400 g of tetraethyleneglycol dimethacrylate (product of Shin-Nakamura Chemical), 40 g of methyl methacrylate and 250 g of toluene. The solution was dispersed in 2,500 mL of a 3 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent. The hydrophobic substance adsorbent was measured for particle diameter in the same manner as in Example 1. The average particle diameter was 34.7 µm.

(Comparative Example 1)

Benzoyl peroxide (1.0 g) was dissolved in a mixture of 50 g of styrene (product of Wako Pure Chemical Industries), 200 g of divinylbenzene (product of Kishida Chemical) and 250 g of toluene. The solution was dispersed in 2,500 mL of a 4 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave an adsorbent.

The adsorbent was measured for particle diameter in the same manner as in Example 1. The average particle diameter was 30 µm.

(Comparative Example 2)

Benzoyl peroxide (1.0 g) was dissolved in 500 g of 2,2-bis{4-[(meth)acryloxy-diethoxy]phenyl}propane (A-BPE-4; product of Shin-Nakamura Chemical). The solution was dispersed in 2,500 mL of a 4 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave an adsorbent.

The adsorbent was measured for particle diameter in the same manner as in Example 1. The average particle diameter was 30 µm.

(Comparative Example 3)

Benzoyl peroxide (1.0 g) was dissolved in a mixture of 100 g of N-vinyl-2-pyrrolidone (product of Wako Pure Chemical Industries), 185 g of divinylbenzene and 250 g of toluene. The solution was dispersed in 2,500 mL of a 4 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave an adsorbent.

The adsorbent was measured for particle diameter in the same manner as in Example 1. The average particle diameter was 130.2 µm.

(Comparative Example 4)

A mixed solution of 100 g of divinylbenzene (product of Sankyo Kasei), 100 g of ethyleneglycol dimethacrylate

(product of Shin-Nakamura Chemical), 200 g of butyl acetate (product of Wako Pure Chemical Industries), 50 g of isoamyl alcohol (product of Wako Pure Chemical Industries) and azobisisobutyronitrile (polymerization initiator; product of Wako Pure Chemical Industries) was suspended in 1 L of a 0.2 weight % aqueous solution of methylcellulose, and the reaction was allowed to proceed at 80°C with stirring for 6 hours. Washing followed by drying gave an adsorbent.

The adsorbent was measured for particle diameter in the same manner as in Example 1. The average particle diameter was 73.1 µm.

(Comparative Example 5)

A mixed solution composed of 50 of styrene, 50 g of methyl methacrylate, 1.0 g of benzoyl peroxide and 50 g of methyl ethyl ketone (product of Wako Pure Chemical Industries) was maintained at 80°C for 8 hours to thereby allow the reaction to proceed and, then, poured into methanol, whereby a styrene-methyl methacrylate copolymer was obtained.

A solution prepared by dissolving 20 g of the above copolymer in 80 g of N,N-dimethylacetamide was extruded through a nozzle with a diameter of 0.36 mm into methanol under stirring. The polymer coagulated in the methanol was washed with water and methanol and dried to give an adsorbent.

The adsorbent was measured for particle diameter in the same manner as in Example 1. The average particle diameter was 55.2 µm.

(Comparative Example 6)

Sodium acrylate (60.4 g; product of Wako Pure Chemical Industries), 339.6 g of methoxypolyethyleneglycol acrylate (product of Kyoeisha Chemical) and 1.8 g of nonaethyleneglycol diacrylate were added to 593.0 g of ion-exchanged water. The mixture was warmed to 40°C and 5.2 g of a 10 weight % aqueous solution of 2,2'-azobis(2-aminodipropane) hydrochloride (polymerization initiator; product of Wako Pure Chemical Industries) was then added. The temperature was then maintained at 80°C for 1 hour to thereby drive the reaction to completion. The polymer obtained was ground and dried to give an adsorbent. The adsorbent was measured for particle diameter in the same manner as in Example 1. The average particle diameter was 75.1 µm.

(Comparative Example 7)

A urethane acrylate oligomer (80 g; V-4263; product of Dainippon Ink and Chemicals), 20 g of 2,3-bis[(4-acryloxy-diethoxy)phenyl]propane (BPE-4; product of Shin-Nakamura Chemical), 110 g of methyl caprate, 50 g of methyl laurate and 4 g of the polymerization initiator 2,2-dimethoxy-2-phenylacetophenone (Irgacure 651; product of Ciba-Geigy) were mixed up. This mixture was extruded through a nozzle with a diameter of 0.16 mm, the extrudate drops were irradiated with ultraviolet rays at 365 nm for effecting polymerization. An adsorbent was thus obtained. The adsorbent was measured for particle diameter in the same manner as in Example 1. The average particle diameter was 466.8 µm.

(Examples 7 and 8)

The monomer specified in Table 1 was used. The amount specified in the table of the monomer was dissolved in the porosity increasing agents specified in Table 1. In this solution was dissolved 1.0 g of benzoyl peroxide. The resulting solution was dispersed in 2,500 mL of a 4 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent. The hydrophobic substance adsorbent was measured for particle diameter in the same manner as in Example 1. The average particle diameter was 35.9 µm in Example 7. In Example 8, the average particle diameter was 67.7 µm.

Table 1

| | Monomer | Porosity increasing agent | Amount charged (g) |
|---|---|---|---|
| Example 7 | Triethyleneglycol dimethacrylate | | 400 |
| | | Toluene | 350 |
| | | Isoamyl alcohol | 50 |

Table 1 (continued)

| | Monomer | Porosity increasing agent | Amount charged (g) |
|---|---|---|---|
| Example 8 | Triethyleneglycol dimethacrylate | | 250 |
| | | Toluene | 600 |

(Example 9)

Benzoyl peroxide (1.0 g; polymerization initiator; product of Kishida Chemical) was dissolved in 500 g of triethyleneglycol dimethacrylate (product of Shin-Nakamura Chemical). The solution was added to a round-bottom flask containing 2,500 mL of a 3 weight % aqueous solution of polyvinyl alcohol, and the temperature was raised to 80°C under a nitrogen atmosphere with stirring by means of an anchor stirrer. The polymerization was carried out at 80°C at a rate of stirring of 300 rpm for 24 hours and, thereafter, the contents were washed with three portions of ion-exchanged water, one portion of acetone and four portions of ethanol. Drying after the washing gave a hydrophobic substance adsorbent according to the present invention.

(Examples 10 and 11)

The procedure of Example 9 was followed in the same manner except that the monomer specified in Table 2 was used and the polymerization with stirring was carried out at the rate of stirring specified in Table 2. A hydrophobic substance adsorbent was thus obtained in each example.

(Example 12)

Benzoyl peroxide (0.7 g) was dissolved in 350 g of triethyleneglycol dimethacrylate. The solution was added to a flat-bottom flask containing 2,500 mL of a 3 weight % aqueous solution of polyvinyl alcohol, the mixture was stirred by means of a turbine stirrer, and the temperature was raised to 80°C under a nitrogen atmosphere. The polymerization was carried out at 80°C at a rate of stirring of 300 rpm for 24 hours and the contents were then washed with three portions of ion-exchanged water, one portion of acetone and four portions of ethanol. Drying after the washing gave a hydrophobic substance adsorbent.

(Examples 13 and 14)

The procedure of Example 12 was followed in the same manner except that the monomer specified in Table 2 was used and the stirring was carried out at the rate of stirring specified in Table 2. A hydrophobic substance adsorbent was thus obtained in each example.

Table 2

| | Monomer | Amount charged(g) | Rate of (rpm) stirring |
|---|---|---|---|
| Example 9 | Triethyleneglycol dimethacrylate | 500 | 300 |
| Example 10 | Triethyleneglycol dimethacrylate | 500 | 400 |
| Example 11 | Triethyleneglycol dimethacrylate | 500 | 100 |
| Example 12 | Triethyleneglycol dimethacrylate | 500 | 300 |
| Example 13 | Triethyleneglycol dimethacrylate | 500 | 400 |
| Example 14 | Triethyleneglycol dimethacrylate | 500 | 100 |

(Example 15)

Benzoyl peroxide (1.0 g; polymerization initiator; product of Kishida Chemical) was dissolved in 500 g of triethyleneglycol dimethacrylate (product of Shin-Nakamura Chemical). The solution was dispersed in 2,500 mL of a 4% aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent. The average particle diameter was 5.0 µm.

(Example 16)

Benzoyl peroxide (1.0 g; polymerization initiator; product of Kishida Chemical) was dissolved in a mixture of 400 g of ethyleneglycol dimethacrylate (product of Shin-Nakamura Chemical) and 100 g of tetramethylolmethane triacrylate. The solution was dispersed in 2,500 mL of a 2 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent. The average particle diameter was 10 μm.

(Example 17)

Methyl methacrylate (100 g) and 1.0 g of benzoyl peroxide (polymerization initiator; product of Kishida Chemical) were dissolved in 400 g of tetraethyleneglycol dimethacrylate (product of Shin-Nakamura Chemical). The solution was dispersed in 2,500 mL of a 1 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave a hydrophobic substance adsorbent. The average particle diameter was 30 μm.

(Comparative Example 8)

Benzoyl peroxide (1.0 g; polymerization initiator; product of Kishida Chemical) was dissolved in a mixture of 200 g of styrene (product of Wako Pure Chemical Industries) and 200 g of divinylbenzene (product of Kishida Chemical). The solution was dispersed in 2,500 mL of a 4 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave an adsorbent. The average particle diameter was 6.5 μm.

(Comparative Example 9)

Benzoyl peroxide (1.0 g; polymerization initiator; product of Kishida Chemical) was dissolved in 500 g of 2,2-bis{4-[(meth)acryloxy-diethoxy]phenyl}propane (A-BPE-4; product of Shin-Nakamura Chemical). The solution was dispersed in 2,500 mL of a 4 weight % aqueous solution of polyvinyl alcohol with stirring, and the temperature was raised to 80°C under a nitrogen atmosphere. After carrying out the polymerization at 80°C for 24 hours, the contents were washed with three portions of ion-exchanged water, one portion of acetone and four portions of ethanol. Drying after the washing gave an adsorbent. The average particle diameter was 30 μm.

(Example 18)

Sodium chloride (275 g) was dissolved in 2,500 mL of a 0.004 weight % aqueous solution of polyvinyl alcohol. Thereto were added 200 g of triethyleneglycol dimethacrylate and 1.5 g of benzoyl peroxide, and the temperature was raised to 80°C with stirring under a nitrogen atmosphere, and the polymerization was carried out for 12 hours. The polymer obtained was washed with water, then washed with acetone and methanol, and dried to give a hydrophobic substance adsorbent according to the present invention. The hydrophobic substance adsorbent obtained had an average particle diameter, in the dried state, of 3.0 mm and a specific surface area of 28 $m^2/g$ on the dry weight basis as determined by the nitrogen adsorption BET method.

(Example 19)

A hydrophobic substance adsorbent was prepared in the same manner as in Example 1 except that 180 g of 1,3-butyleneglycol di(meth)acrylate was used in lieu of 200 g of triethyleneglycol dimethacrylate used in Example 18 and that 100 g of isoamyl alcohol was further added as a porosity increasing agent. The average particle diameter in the dried state was 5.2 mm and the specific surface area on the dry weight basis as determined by the nitrogen adsorption BET method was 377 $m^2/g$.

(Example 20)

Sodium chloride (100 g) was added to and dissolved in 2,500 mL of a 0.01 weight % aqueous solution of

polyvinyl alcohol. Thereto were added 200 g of tetraethyleneglycol dimethacrylate, 50 g of toluene and 1.5 g of benzoyl peroxide, and the temperature was raised with stirring under a nitrogen atmosphere. When the temperature of the polymerization system arrived at 60°C, 50 mL of a 20 weight % aqueous solution of sodium chloride was added. Further, when the polymerization system temperature arrived at 70°C, 50 mL of a 20 weight % aqueous solution of sodium chloride was added. The polymerization system temperature was then raised to 80°C, and the polymerization reaction was carried out at 80°C for 12 hours. After completion of the polymerization, the polymer obtained was washed with water, then washed with acetone and methanol, and dried to give a hydrophobic substance adsorbent. The yield of the hydrophobic substance adsorbent obtained was 92.4% based on the amount of the monomer charged, and the average particle diameter was 3.0 mm.

(Example 21)

1,3-Butyleneglycol di(meth)acrylate (200 g) and 1.5 g of benzoyl peroxide were added to 2,500 mL of a 0.01 weight % aqueous solution of polyvinyl alcohol, and the temperature was raised with stirring under a nitrogen atmosphere. When the polymerization system temperature arrived at 60°C, 50 mL of a 20 weight % aqueous solution of sodium chloride was added. Then, the polymerization system temperature was raised to 80°C, and the polymerization reaction was carried out at 80°C for 12 hours. After completion of the polymerization, the polymer obtained was washed with water, then washed with acetone and methanol, and dried to give a hydrophobic substance adsorbent. The yield of the hydrophobic substance adsorbent obtained was 90.7% based on the charged amount, and the average particle diameter was 5.2 mm.

(Example 22)

Polyvinyl alcohol (0.1 g) was dissolved in 2,500 mL of ion-exchanged water. To this dispersant solution were added 200 g of triethyleneglycol dimethacrylate (product of Shin-Nakamura Chemical), 100 g of toluene (product of Wako Pure Chemical Industries) and 1.5 g of benzoyl peroxide (product of Kishida Chemical), and the temperature was raised with stirring under a nitrogen atmosphere. The polymerization reaction was carried out at 80°C for 12 hours and, after completion of the polymerization, the polymer obtained was washed with water, then washed with acetone and methanol, and dried to give a hydrophobic substance adsorbent.

(Example 23)

Polyvinyl alcohol (0.1 g) was dissolved in 3,000 mL of ion-exchanged water. Sodium chloride (100 g) was added to and dissolved in this dispersant solution. Further, 200 g of 1,3-butyleneglycol di(meth)acrylate (product of Shin-Nakamura Chemical), 200 g of tetramethylolmethane triacrylate (product of Shin-Nakamura Chemical) and 1.5 g of benzoyl peroxide were added, and the temperature was raised with stirring under a nitrogen atmosphere. The polymerization reaction was carried out at 80°C for 12 hours and, after completion of the polymerization, the polymer obtained was washed with water, then washed with acetone and methanol, and dried to give a hydrophobic substance adsorbent.

(Example 24)

Polyvinyl alcohol (0.1 g) was dissolved in 1,250 mL of ion-exchanged water. To this dispersant solution were added 150 g of triethyleneglycol dimethacrylate (product of Shin-Nakamura Chemical), 100 g of toluene (product of Wako Pure Chemical Industries) and 1.5 g of benzoyl peroxide (product of Kishida Chemical), and the temperature was raised with stirring under a nitrogen atmosphere. The polymerization reaction was carried out at 80°C for 12 hours and, after completion of the polymerization, the polymer obtained was washed with water, then washed with acetone and methanol, and dried to give a hydrophobic substance adsorbent.

<Performance evaluation>

The hydrophobic substance adsorbents obtained in the above examples and comparative examples were evaluated for their performances as follows.

(1) Elution test

Each of the hydrophobic substance adsorbents prepared as mentioned above was checked as to whether a hydrophobic substance was eluted therefrom.

One gram of each of the hydrophobic substance adsorbents obtained in the above examples and comparative examples was dispersed in 10 mL of methanol and stirred well. This dispersion was centrifuged at 3,000 rpm for 10 minutes, the supernatant was collected and concentrated to 1 mL in a centrifugal evaporator, and 100 μL of the concentrate was injected into an HPLC for assaying a hydrophobic substance eluted from the hydrophobic substance adsorbent into the supernatant methanol.
The measurement was carried out using authentic samples of bisphenol A (hereinafter referred to as BPA) and nonylphenol (hereinafter referred to as NP) (both being products of Wako Pure Chemical Industries) as reference standards. The HPLC conditions were as shown below.

(HPLC measurement conditions)

Column: Wako Pak Agri-9 (product of Wako Pure Chemical Industries; 4.6 x 250 mm)
Eluents: Eluent A = 0.01 N hydrochloric acid / acetonitrile = 70/30
Eluent B = 0.01 N hydrochloric acid / acetonitrile = 30/70
Elution conditions: linear gradient from 100% eluent A to 100% eluent B (30 minutes)
Detection wavelength: 210 nm
Injection size: 100 μL.

(Results)

The results of assaying for the reference standards BPA (peak 11) and NP (peak 12) are shown in Fig. 3.
The results of testing of the eluate from the hydrophobic substance adsorbent of Example 1 are shown in Fig. 4. In Fig. 4, no peak was found at the positions of elution of BPA and NP, hence their elution from the hydrophobic substance adsorbent of Example 1 could not be confirmed. The same results were obtained with the hydrophobic substance adsorbents of Examples 2 to 24. The results of testing of the eluate from the hydrophobic substance adsorbent of Comparative Example 1 are shown in Fig. 5. Not only peaks were confirmed at the positions of elution of NP and BPA but also a number of peaks for other hydrophobic substances were confirmed. The results of the test of the eluates from the hydrophobic substance adsorbents of Comparative Examples 2 to 9 showed that a number of hydrophobic substances had been eluted, like in the case shown in Fig. 5.
In particular, the eluate from the hydrophobic substance adsorbent of Comparative Example 2 gave a high peak at the position of elution of BPA. This is probably due to the fact that the monomer (A-BPE-4) used in Comparative Example 2 contains the BPA structure. Presumably, BPA and/or impurities having a BPA-like structure contained in fairly large amounts in that monomer were eluted. Even by repeated washing of the hydrophobic substance adsorbent, it was impossible to eliminate this peak.
The above results indicate that the hydrophobic substance adsorbents used according to the present invention as obtained in the examples allow little elution of hydrophobic substances and therefore are useful in assaying hydrophobic substances.
On the other hand, the hydrophobic substance adsorbents prepared by the prior art technologies (Comparative Examples) allow much elution of hydrophobic substances, hence cannot be used in assaying or removing hydrophobic substances.

(2) Adsorptivity test

The hydrophobic substance adsorbents obtained in the above examples and comparative examples were evaluated for their ability to adsorb hydrophobic substances.
A 0.2-g portion of each of the hydrophobic substance adsorbents obtained in the above examples and comparative examples was packed into a polypropylene column having an inside diameter of 9 mm and a length of 65 mm (with a polyethylene filter having a pore size of 20 μm). Separately, a 10 weight % methanol solution of BPA with a BPA concentration of 1 μg/mL was prepared from a BPA standard solution (product of Wako Pure Chemical Industries). This reference standard solution was applied to the above column. After filtration under suction, 6 mL of methanol was added to the column to desorb BPA. The methanol was recovered and evaporated to dryness in a centrifugal evaporator, the residue was dissolved in phosphate buffer for ELISA, and the solution was subjected to assay in an ELISA system.
The analysis in the ELISA system was carried out by the following technique. A 50-μL portion of the test substance was added to a plate with an anti-BPA antibody immobilized thereon, 50 μL of HRP (horseradish peroxidase)-labeled BPA was further added, and the reaction was allowed to proceed at room temperature for 2 hours. After washing the plate, o-phenyldiamine (OPD) was added, the reaction was allowed to proceed for 15 minutes, and the absorbance

was measured at 492 nm.

Based on the amount of BPA in the supernatant, the amount of BPA adsorbed on the hydrophobic substance adsorbent was calculated. Further, a blank test was carried out following the same procedure using a BPA-free solution.

The test results are shown in Table 3. The hydrophobic substance adsorbents of the examples gave almost the same values as the value in the case without addition of BPA; they allowed little elution of impurity substances and were very satisfactory as hydrophobic substance adsorbents. In particular, the adsorbents of Examples 1 to 4 in which the polymerization was carried out using the oil-soluble mixture comprising the monomer and polymerization initiator alone as the material without using any porosity increasing agent gave low blank values, hence good results. The BPA value detected in the test without addition of BPA is probably due to elution of BPA from the polypropylene column itself or the polyethylene filter.

On the other hand, the blank values were generally high in the comparative examples, suggesting that the possibility of the assay being interfered would be high. The adsorbents of Comparative Examples 2 and 7, in particular, gave high blank values and were judged to be unusable in pretreatment for assaying trace amounts of hydrophobic substances, among others.

Table 3

| | BPA concentration (pg/mL) |
|---|---|
| BPA not added | 62.7 |
| Example 1 | 58.8 |
| Example 2 | 60.1 |
| Example 3 | 60.5 |
| Example 4 | 66.0 |
| Example 5 | 85.6 |
| Example 6 | 140.7 |
| Comparative example 1 | 681.7 |
| Comparative example 2 | 1585.0 |
| Comparative example 3 | 534.1 |
| Comparative example 4 | 386.1 |
| Comparative example 5 | 611.2 |
| Comparative example 6 | 501.7 |
| Comparative example 7 | 1487.0 |

Further, various hydrophobic substances were used as samples and added to the column in the same manner as mentioned above, and adsorptivity test was carried out for each hydrophobic substance sample. The results obtained are shown in Tables 4 and 5. The hydrophobic substance adsorbents of the examples gave good adsorption percentage values of not less than 90% after subtraction of the blank value for all the hydrophobic substances. In Examples 1 and 2, in particular, in which only one crosslinkable monomer species was used, the percentages of adsorption of the various hydrophobic substances were good.

Table 4

| | Percent adsorption (%) | | | | | |
|---|---|---|---|---|---|---|
| | Example 1 | Example 2 | Example 3 | Example 4 | Example 5 | Example 6 |
| Bisphenol A | 99.7 | 99.5 | 94.5 | 97.0 | 94.0 | 93.5 |
| Octylphenol | 98.7 | 97.0 | 91.5 | 93.0 | 93.1 | 95.0 |
| Nonylphenol | 99.0 | 97.2 | 90.9 | 94.3 | 95.0 | 91.2 |
| Di-2-ethylhexyl phthalate | 97.1 | 98.2 | 92.1 | 93.1 | 92.1 | 93.6 |
| Butyl hexyl phthalate | 96.3 | 99.0 | 94.4 | 92.9 | 94.0 | 92.8 |

Table 4 (continued)

| | Percent adsorption (%) | | | | | |
|---|---|---|---|---|---|---|
| | Example 1 | Example 2 | Example 3 | Example 4 | Example 5 | Example 6 |
| Di-n-butyl phthalate | 99.0 | 99.5 | 93.5 | 90.3 | 92.9 | 91.7 |
| Dioxin | 99.3 | 99.5 | 96.6 | 94.8 | 91.0 | 94.9 |
| β - Estradiol | 98.0 | 98.4 | 96.8 | 90.0 | 95.8 | 95.0 |

Table 5

| | Percent adsorption (%) | | | | |
|---|---|---|---|---|---|
| | Comparative Example 1 | Comparative Example 3 | Comparative Example 4 | Comparative Example 5 | Comparative Example 6 |
| Bisphenol A | 88.0 | 87.0 | 89.5 | 87.0 | 90.2 |
| Octylphenol | 89.0 | 93.0 | 84.4 | 80.0 | 72.6 |
| Nonylphenol | 85.0 | 94.1 | 80.5 | 75.1 | 81.7 |
| Di-2-ethylhexyl phthalate | 88.3 | 89.4 | 89.6 | 72.4 | 78.9 |
| Butyl hexyl phthalate | 86.0 | 93.1 | 84.5 | 75.8 | 84.5 |
| Di-n-butyl phthalate | 87.4 | 90.2 | 91.8 | 82.6 | 88.0 |
| Dioxin | 76.5 | 90.8 | 82.2 | 74.0 | 71.7 |
| β - Estradiol | 86.0 | 87.0 | 85.2 | 68.1 | 76.4 |

(3) Adsorptivity reproducibility evaluation

The adsorbent obtained in each of the examples and comparative examples was each packed in 20 columns of the same kind as used in the above adsorptivity test (2), and BPA assay was carried out by following the same procedure as described under (2) for confirming the reproducibility from the adsorption percentage viewpoint.

The results obtained are shown in Tables 6 and 7. The hydrophobic substance adsorbents of the examples showed very good reproducibility with a CV value (standard deviation / average value x 100) of not higher than 2%. On the other hand, the hydrophobic substance adsorbents of the comparative examples showed a great variation with a CV value of not lower than 7%; it was thus found difficult to use them in pretreatment for high precision assay, in particular.

Table 6

| | Example 1 | Example 2 | Example 3 | Example 4 | Example 5 | Example 6 |
|---|---|---|---|---|---|---|
| Meanvalue (%) | 99.7 | 95.7 | 94.5 | 97.0 | 94.0 | 93.5 |
| Standard deviation | 0.3 | 0.9 | 0.7 | 0.9 | 1.4 | 1.8 |
| CV (%) | 0.3 | 0.9 | 0.7 | 0.9 | 1.5 | 1.9 |

Table 7

| | Comparative Example 1 | Comparative Example 3 | Comparative Example 4 | Conparative Example 5 | Comparative Example 6 |
|---|---|---|---|---|---|
| Meanvalue (%) | 88.0 | 87.0 | 89.7 | 87.0 | 90.2 |

Table 7 (continued)

| | Comparative Example 1 | Comparative Example 3 | Comparative Example 4 | Conparative Example 5 | Comparative Example 6 |
|---|---|---|---|---|---|
| Standard deviation | 14.9 | 9.7 | 12.8 | 7.9 | 13.1 |
| C V (%) | 16.9 | 11.1 | 14.3 | 9.1 | 14.5 |

(4) Change in adsorptivity upon recycling treatment

The above-prepared hydrophobic substance adsorbents were each evaluated for change in adsorptivity by subjecting to repeated hydrophobic substance adsorption and desorption treatments.

A 0.1-g portion of each hydrophobic substance adsorbent was packed in the same column as used in the above adsorptivity reproducibility evaluation (3). A BPA standard solution (100 ng/mL solution in 10% methanol-water) was added thereto. BPA in the eluate from the column was assayed by the ELISA method in the same manner as in the above adsorptivity test (2).

Furthermore, recycling treatment was performed by passing 5 mL of methanol through the column and the eluate was recovered. Thereafter, the BPA standard solution was again added, and BPA in the eluate was assayed in the same manner. These operations were repeated, and the adsorptivity was measured after each repetition.

The results are shown in Tables 8 and 9. The hydrophobic substance adsorbents of the examples showed no change in adsorptivity and were found to be repeatedly usable after a facile recycling treatment using methanol. On the other hand, the hydrophobic substance adsorbents of the comparative examples showed marked decrease in adsorptivity due to differences in physical property values and they were found to be difficult to subject to recycling treatment and to be unusable repeatedly.

Table 8

| Number of assays | Percent adsorption (%) | | | | | |
|---|---|---|---|---|---|---|
| | Example 1 | Example 2 | Example 3 | Example 4 | Example 5 | Example 6 |
| 1 | 99.7 | 99.5 | 94.5 | 97.0 | 94.0 | 93.5 |
| 2 | 99.5 | 99.3 | 92.4 | 95.7 | 93.0 | 92.6 |
| 3 | 99.0 | 99.2 | 91.5 | 94.5 | 92.0 | 93.8 |
| 4 | 99.1 | 98.7 | 91.9 | 93.4 | 91.9 | 92.0 |
| 5 | 99.0 | 99.1 | 90.5 | 92.1 | 91.1 | 92.5 |

Table 9

| Number of assays | Percent adsorption (%) | | | | |
|---|---|---|---|---|---|
| | Comparative Example 1 | Comparative Example 3 | Comparative Example 4 | Comparative Example 5 | Comparative Example 6 |
| 1 | 88.0 | 87.0 | 89.5 | 87.0 | 90.2 |
| 2 | 85.0 | 80.1 | 82.4 | 61.4 | 75.7 |
| 3 | 80.2 | 71.9 | 79.9 | 58.6 | 68.6 |
| 4 | 70.2 | 72.3 | 71.4 | 55.5 | 64.5 |
| 5 | 62.0 | 67.1 | 68.8 | 50.4 | 58.4 |

(5) Re: influence of particle size distribution

The same evaluation as in the above adsorptivity reproducibility evaluation (3) was performed using dioxin in lieu of BPA, and the adsorption percentage values were calculated. The results obtained are shown in Table 10.

The adsorbents of Examples 9 to 11 showed very good reproducibility while certain variations were confirmed

with those of Examples 12 to 14. This is presumably due to the great dispersions in particle size distribution of the adsorbents of Examples 12 to 14, as shown in said Table 10.

(Particle size distribution measurement)

The hydrophobic substance adsorbents obtained in the above examples and comparative examples were measured for particle size distribution. The particle size distribution measurement was performed using Coulter Multisizer (product of Coulter) or an optical microscope (product of Olympus). The results are shown in Table 10.

Table 10

| | Particle size distribution | | | Adsorption reproducibility | | |
|---|---|---|---|---|---|---|
| | Mean. particle (μm) diameter | Standard deviation | CV (%) | Mean value (%) | Standard deviation | CV (%) |
| Example 9 | 44.9 | 10.5 | 23.6 | 94.9 | 0.5 | 0.5 |
| Example10 | 11.9 | 1.77 | 14.8 | 99.1 | 0.7 | 0.7 |
| Example11 | 104.1 | 29.6 | 28.4 | 98.1 | 0.9 | 0.9 |
| Example 12 | 40.2 | 20.1 | 50.0 | 90.1 | 12.3 | 13.6 |
| Example 13 | 17.0 | 7.18 | 42.2 | 92.3 | 14.5 | 15.7 |
| Example 14 | 131.7 | 55.1 | 41.8 | 92.9 | 18.0 | 19.4 |

(6) Re: influences of other physical properties

The hydrophobic substance adsorbents obtained in the above examples and comparative examples were each measured for average pore volume, average pore diameter and specific surface area by the BET method (specific surface area/pore distribution measurement apparatus NOVA-200; product of Yuasa Ionics). The measurement results are shown in Table 11. The performance evaluation results for the respective adsorbents are also shown in the same table.

The data indicate that the adsorbents of Examples 1, 3 and 4, in which the pore volume, specific surface area and pore diameter were controlled within the respective preferred ranges, had especially good performance.

Table 11

| Adsorbent | Physical proprety values of particles | | | Performance test results | | | |
|---|---|---|---|---|---|---|---|
| | Pore volume (mL/g) | Specific surface area ($m^2$/g) | pore diameter (nm) | Blank test (pg/mL) | Adsorption reproducibility | | |
| | | | | | Mean value (%) | SD | CV(%) |
| Example 1 | 0.0017 | 0.130 | 18.01 | 58.8 | 99.7 | 0.3 | 0.3 |
| Example 3 | 0.014 | 2.330 | 10.03 | 60.5 | 94.5 | 0.7 | 0.7 |
| Example 4 | 0.09 | 6.990 | 15.09 | 66.0 | 97.0 | 0.9 | 0.9 |
| Example 7 | 1.01 | 150.6 | 8.1 | 222.0 | 93.0 | 7.9 | 8.5 |
| Example 8 | 1.33 | 361 | 33.17 | 290.9 | 91.2 | 13.1 | 14.4 |

(7) Practical application test in waste water treatment

A test was performed of removing hydrophobic substances from river water.

Water (100 L) was collected from a standard river. BPA was not detected in the river water used. Therefore, the BPA standard solution was added to this river water to a concentration of 100 ng/mL.

The hydrophobic substance adsorbent obtained in Example 18 was packed in a stainless steel column (diameter 10 cm x length 50 cm). The whole amount (100 L) of the above river water was passed through the column at a flow rate of 1 L/minute. BPA in the thus-treated water was assayed by the same ELISA method as mentioned above.

As a result, the adsorption percentage was 100%, and at least 99% of the adsorptivity was restored upon recycling treatment comprising washing with methanol. In Examples 19 to 24, almost the same results were obtained.

(8) Practical application test in exhaust gas treatment

A practical application test was performed in removing hydrophobic substances from an exhaust gas from an incinerator.

In an ordinary incineration plant where the exhaust gas generated in an incinerator was discharged from a chimney via a bag filter, a stainless steel column (diameter 10 cm x length 50 cm) packed with the adsorbent obtained in Example 18 was disposed behind the bag filter.

The incineration work was carried out, and the exhaust gas discharged from the column was recovered and assayed for dioxin by the above-mentioned ELISA method. As compared with the case in which no column was disposed, the adsorption percentage was 98.8% and, after recycling treatment by washing with methanol, the removal percentage was recovered to 97% or higher. In Examples 19 to 24, too, good results were obtained.

(9) Packing for liquid chromatography

The hydrophobic substance adsorbents of Examples 15 to 17 and Comparative Examples 8 and 9 were used as packings for liquid chromatography, and hormonally active agents were assayed.

A 0.8-g portion of each hydrophobic substance adsorbent was dispersed in 30 mL of acetonitrile, and the dispersion was sonicated for 5 minutes and then poured into a packer for packing (product of Umetani Seiki). A liquid feeding pump (product of Sanuki Industry) was connected to the packer, and the adsorbent was packed into a stainless steel column with an inside diameter of 4.6 mm and a length of 50 mm under a pressure of 300 $kg/cm^2$. Using the column obtained, assay was performed under the following conditions.

Liquid chromatography conditions:

| (Apparatus) | |
|---|---|
| Feeding pump | LC-9A (product of Shimadzu) |
| Sample injection device | ASU-420 (product of Sekisui Chemical) |
| Detector | SPD-6AV (product of Shimadzu) |
| (Analysis conditions) | |
| Column | column (4.6 x 50 mm) packed with each hydrophobic substance adsorbent |
| Eluents | solution A = water:acetonitrile = 70:30 solution B = water:acetonitrile = 20:80 |
| Detection wavelength | 225 nm |
| Size of sample injected | 100 μL |

The chromatogram obtained by assaying BPA and NP using the hydrophobic substance adsorbent of Example 15 is shown in Fig. 6; and the chromatogram obtained by assaying phthalic acid esters is shown in Fig. 7. For each substance, good separation was attained in a short time. When the hydrophobic substance adsorbents of Examples 16 and 17 were used, good separations were attained, as in Example 15.

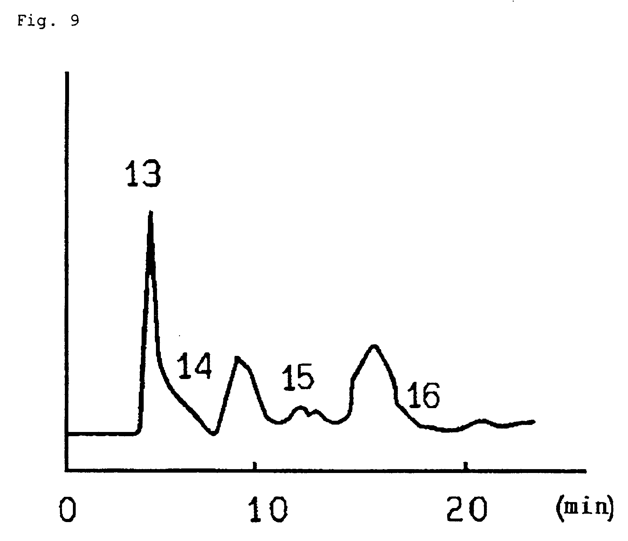

On the other hand, the results obtained by performing assays in the same manner using the adsorbent of Comparative Example 8 are shown in Fig. 8 (for BPA and NP) and Fig. 9 (for phthalic acid esters). As compared with Fig. 6 and Fig. 7, the separation performance was poor in spite of longer assay time. When the adsorbent of Comparative Example 9 was used, similar results were obtained.

(10) Assay method using a precolumn:

The hydrophobic substance adsorbents of Examples 15 to 17 and Comparative Examples 8 and 9 were each used as a precolumn packing for liquid chromatography, and hormonally active agents were assayed.

A 0.6-g portion of each hydrophobic substance adsorbent was dispersed in 30 mL of acetonitrile and treated and packed into a stainless steel column with an inside diameter of 4.6 mm and a length of 30 mm in the same manner as mentioned above under (9). Using the precolumn obtained, assays were carried out under the conditions mentioned

below.

An apparatus as shown in Fig. 2 was constructed using the same apparatus elements as mentioned above under (9). The assays were performed under the same conditions as mentioned above under (9) except that the column described above under (1) was used as the separation column and solution C (phosphate buffer pH 2.5) and solution D (phosphate buffer (pH 2.5):methanol = 20:80) were used as the eluents.

The sample is first injected into the precolumn 4 from the sample injection device 3 by means of the eluent C via the switching valve 7, and the hormonally active agents in the sample are adsorbed on the precolumn adsorbent. Other components are discharged from the drain 8. Thereafter, the eluent is changed over to the eluent D, whereby the hormonally active agents are desorbed from the precolumn 4 and led to the separation column 5, whereby they are separated into the respective components.

The chromatogram obtained by assaying BPA and NP using the hydrophobic substance adsorbent of Example 15 as the precolumn packing was similar to Fig. 6; and the chromatogram obtained by assaying phthalic acid esters was similar to Fig. 7, showing good separation in a short time. When the hydrophobic substance adsorbents of Examples 16 and 17 were used as the precolumn packings, good separation was attained, like in Example 15.

On the other hand, the results obtained by carrying out the assays in the same manner using the adsorbent of Comparative Example 8 as the precolumn packing were similar to those shown in Fig. 8 (BPA and NP) and Fig. 9 (phthalic acid esters). As compared with Fig. 6 and Fig. 7, the separation performance was poor in spite of longer assay time. When the adsorbent of Comparative Example 9 was used as the precolumn packing, similar results were obtained.

The hydrophobic substance adsorbent used according to the present invention, which has the above constitution, can highly precisely adsorb hydrophobic substances, in particular hormonally active agents or polycyclic aromatic hydrocarbons, occurring in liquid or gaseous samples and, further, the hydrophobic substances once adsorbed can be readily desorbed by a washing procedure using an organic solvent etc.

Therefore, the hydrophobic substance adsorbent used according to the present invention can judiciously be used in assaying or removing low concentrations of hydrophobic substances, in particular hormonally active agents or polycyclic aromatic hydrocarbons.

Furthermore, the hydrophobic substance adsorbent used according to the present invention hardly gives unnecessary elution products from the hydrophobic substance adsorbent itself, so that it can be used in various assays, in particular trace amounts of substances, without adversely affecting the assay results.

The hydrophobic substance adsorbent used according to the present invention has a high degree of crosslinking, hence has high mechanical strength, so that it can be handled with ease even in large size treatment or in repeated use, without any damage or the like and without any significant change in adsorption performance.

## Claims

1. Use of a hydrophobic substance adsorbent comprising a crosslinked polymer obtainable by polymerizing a crosslinkable monomer and a non-crosslinkable monomer, for adsorbing a hormonally active agent, a polycyclic aromatic hydrocarbon or a volatile organic compound, wherein said crosslinkable monomer comprises at least one member selected from the group consisting of crosslinkable monomers represented by the general formulas I to III:

$$A\text{-}X\text{-}A \qquad \text{I}$$

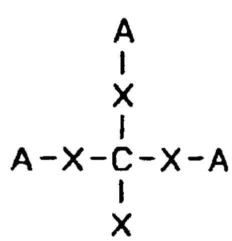

· · · II

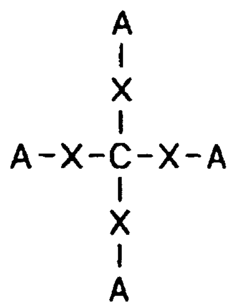

· · · III

in the formulas, A represents a (meth)acryloyl group and X represents an alkyl chain, alkylene chain or oxyalkylene chain containing 1 to 24 carbon atoms and any hydrogen atom of X may be substituted by a methyl or hydroxyl group, and when a (meth)acrylic acid ester is used as said non-crosslinkable monomer, the non-crosslinkable monomer is used in an amount of 0 to 20 weight parts per 100 weight parts of said crosslinkable monomer, and when a monomer other than (meth)acrylic acid esters is used as said non-crosslinkable monomer, the non-crosslinkable monomer other than (meth)acrylic acid esters is used in an amount of 0 to 20 weight parts per 100 weight parts of the total amount of the (meth)acrylic acid ester monomers (sum of the crosslinkable monomer and non-crosslinkable monomer).

**2.** The use according to Claim 1, wherein the crosslinkable monomer represented by the general formula I is an alkyleneglycol di(meth)acrylate.

**3.** The use according to Claim 1 or 2, wherein the hydrophobic substance adsorbent comprises a crosslinked polymer obtainable by polymerizing only one crosslinkable monomer alone as selected from among acrylic acid esters and methacrylic acid esters, or a crosslinked polymer obtainable by copolymerizing two or more crosslinkable monomers selected from among acrylic acid esters and methacrylic acid esters, with one of the crosslinkable monomers subjected to copolymerization accounting for at least 90 weight % of the total crosslinkable monomers.

**4.** The use according to any of Claims 1 to 3, wherein the hydrophobic substance adsorbent has an average pore volume of 0.0001 to 0.1 mL/g.

**5.** The use according to any of Claims 1 to 3, wherein the hydrophobic substance adsorbent has a specific surface area of 0.01 to 10 $m^2$/g.

**6.** The use according to Claim 4 or 5, wherein the hydrophobic substance adsorbent has an average pore diameter of 0.1 to 30 nm.

**7.** The use according to any of Claims 1 to 3, wherein the hydrophobic substance adsorbent has a coefficient of variation of particle size distribution of 1 to 40.

**8.** The use according to any of Claims 1 to 7, wherein the hormonally active agent or the polycyclic aromatic hydrocarbon comprises at least one member selected from the group consisting of alkylphenols, bisphenol A, phthalic acid esters, dioxins, polychlorinated biphenyls, estrogens, and benzo[a]pyrene.

**9.** Use of a hydrophobic substance adsorbent as defined in any of Claims 1 to 8 in a packing for liquid chromatography for assaying a hormonally active agent.

**10.** Use of a hydrophobic substance adsorbent as defined in any of Claims 1 to 8 in a method of assaying a hormonally active agent using a liquid chromatography apparatus constituted at least of a liquid feeding pump, a sample introduction device, a precolumn, a separation column and a detector, said precolumn is a column packed with the hydrophobic substance adsorbent, and which method comprises at least the adsorption step of injecting a sample at least once into said precolumn to thereby cause said hormonally active agent in the sample to be adsorbed on said precolumn and the step of desorbing the hormonally active agent adsorbed on said precolumn and introducing the substance into the separation column.

## Patentansprüche

**1.** Verwendung eines Adsorbens für hydrophobe Substanzen, umfassend ein vernetztes Polymer, das durch Polymerisieren eines vernetzbaren Monomers und eines nicht-vernetzbaren Monomers erhältlich ist, zur Adsorption einer hormonell aktiven Substanz, eines polycyclischen aromatischen Kohlenwasserstoffs oder einer flüchtigen organischen Verbindung, wobei das vernetzbare Monomer mindestens einen Vertreter, ausgewählt aus der Gruppe, bestehend aus vernetzbaren Monomeren, dargestellt durch die allgemeinen Formeln I bis III, umfaßt:

A-X-A    I

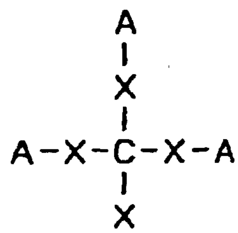

• • • II

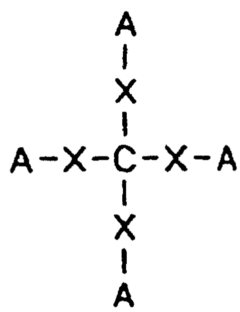

• • • III

wobei in den Formeln A eine (Meth)acryloylgruppe darstellt und X eine Alkylkette, eine Alkylenkette oder eine Oxyalkylenkette, die 1 bis 24 Kohlenstoffatome enthält, darstellt, und wobei jedes Wasserstoffatom von X gegen eine Methyl- oder eine Hydroxylgruppe substituiert sein kann, und wenn ein (Meth)acrylsäureester als das nicht-vernetzbare Monomer verwendet wird, das nicht-vemetzbare Monomer in einer Menge von 0 bis 20 Gew.-Teilen, bezogen auf 100 Gew.-Teile des vernetzbaren Monomers, verwendet wird, und wenn ein von (Meth)acrylsäureester verschiedenes Monomer als das nicht-vernetzbare Monomer verwendet wird, das von (Meth)acrylsäureester verschiedene nicht-vernetzbare Monomer in einer Menge von 0 bis 20 Gew.-Teilen, bezogen auf 100 Gew. -Teile der Gesamtmenge an (Meth)acrylsäureester-Monomeren (die Summe des vernetzbaren Monomers und des nicht-vernetzbaren Monomers), verwendet wird.

**2.** Verwendung nach Anspruch 1, wobei das vernetzbare Monomer, dargestellt durch die allgemeine Formel I, ein Alkylenglykol-di(meth)acrylat ist.

**3.** Verwendung nach Anspruch 1 oder 2, wobei das Adsorbens für hydrophobe Substanzen ein vernetztes Polymer, erhältlich durch Polymerisieren nur eines vernetzbaren Monomers allein, ausgewählt aus Acrylsäureestern und Methacrylsäureestern, oder ein vernetztes Polymer, erhältlich durch Copolymerisieren von zwei oder mehreren vernetzbaren Monomeren, ausgewählt aus Acrylsäureestern und Methacrylsäureestern, wobei eines der vernetzbaren Monomere, die einer Copolymerisation unterzogen wurden, mindestens 90 Gew.-% der insgesamt vernetzbaren Monomere ausmacht, umfaßt.

**4.** Verwendung nach einem der Ansprüche 1 bis 3, wobei das Adsorbens für hydrophobe Substanzen ein durchschnittliches Porenvolumen von 0,0001 bis 0,1 mL/g aufweist.

**5.** Verwendung nach einem der Ansprüche 1 bis 3, wobei das Adsorbens für hydrophobe Substanzen eine spezifische

Oberfläche von 0,01 bis 10 $m^2/g$ aufweist.

**6.** Verwendung nach Anspruch 4 oder 5, wobei das Adsorbens für hydrophobe Substanzen einen durchschnittlichen Porendurchmesser von 0,1 bis 30 nm aufweist.

**7.** Verwendung nach einem der Ansprüche 1 bis 3, wobei das Adsorbens für hydrophobe Substanzen einen Koeffizienten der Variation der Teilchengrößenverteilung von 1 bis 40 aufweist.

**8.** Verwendung nach einem der Ansprüche 1 bis 7, wobei die hormonell aktive Substanz oder der polycyclische aromatische Kohlenwasserstoff mindestens einen Vertreter, ausgewählt aus der Gruppe, bestehend aus Alkylphenolen, Bisphenol A, Phthalsäureestern, Dioxinen, polychlorierten Biphenylen, Östrogenen und Benzo[a]pyren, umfaßt.

**9.** Verwendung eines Adsorbens für hydrophobe Substanzen, wie in einem der Ansprüche 1 bis 8 definiert, in einer Packung für die Flüssigchromatographie zum Testen einer hormonell aktiven Substanz.

**10.** Verwendung eines Adsorbens für hydrophobe Substanzen, wie in einem der Ansprüche 1 bis 8 definiert, in einem Verfahren zum Testen einer hormonell aktiven Substanz unter Verwendung einer Flüssigchromatographievorrichtung, aufgebaut aus mindestens einer Flüssigkeitszufuhrpumpe, einer Probeneinführvorrichtung, einer Vorsäule, einer Trennsäule und einem Detektor, wobei die Vorsäule eine Säule ist, die mit einem Adsorbens für hydrophobe Substanzen gepackt ist, und wobei das Verfahren mindestens den Adsorptionsschritt des Injizierens einer Probe mindestens einmal in die Vorsäule, um dadurch zu bewirken, daß die hormonell aktive Substanz in der Probe auf der Vorsäule adsorbiert wird, und den Schritt des Desorbierens der hormonell aktiven Substanz, die auf der Vorsäule adsorbiert ist, und das Einführen der Substanz in die Trennsäule umfaßt.

**Revendications**

**1.** Utilisation d'un adsorbant de substances hydrophobes comprenant un polymère réticulé pouvant être obtenu par polymérisation d'un monomère réticulable et d'un monomère non réticulable pour adsorber un agent hormonoactif, un hydrocarbure aromatique polycyclique ou un composé organique volatil, dans lequel ledit monomère réticulable comprend au moins un élément choisi dans l'ensemble constitué de monomères réticulables représentés par les formules générales I à III :

$$A\text{-}X\text{-}A \qquad I$$

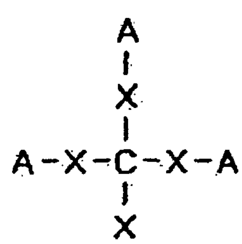

· · · II

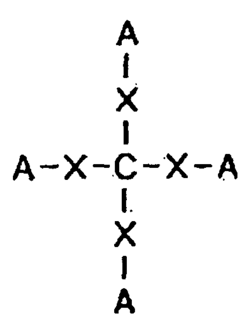

· · · III

dans les formules, A représente un groupe (méth)acryloyle et X représente une chaîne alkyle, une chaîne alkylène ou une chaîne oxyalkylène contenant de 1 à 24 atomes de carbone, et tout atome d'hydrogène de X peut être substitué par un groupe méthyle ou hydroxyle, et
quand on utilise un ester d'acide (méth)acrylique comme étant ledit monomère non réticulable, on utilise le monomère non réticulable en une quantité de 0 à 20 parties en poids pour 100 parties en poids dudit monomère réticulable, et
quand on utilise un monomère autre que des esters d'acide (méth)acrylique comme étant ledit monomère non réticulable, on utilise le monomère non réticulable autre que des esters d'acide (méth)acrylique en une quantité de 0 à 20 parties en poids pour 100 parties en poids de la quantité totale des monomères esters d'acide (méth) acrylique (somme du monomère réticulable et du monomère non réticulable).

**2.** Utilisation selon la revendication 1, dans laquelle le monomère réticulable représenté par la formule générale I est un di(méth)acrylate d'alkylèneglycol.

**3.** Utilisation selon la revendication 1 ou 2, dans laquelle l'adsorbant de substances hydrophobes comprend un polymère réticulé pouvant être obtenu par polymérisation seulement d'un monomère réticulable individuellement choisi parmi des esters de l'acide acrylique et des esters de l'acide méthacrylique, ou un polymère réticulé pouvant être obtenu par copolymérisation de deux ou de plus de deux monomères réticulables choisis parmi des esters de l'acide acrylique et des esters de l'acide méthacrylique, avec l'un des monomères réticulables soumis à une copolymérisation qui représente au moins 90 % en poids des monomères réticulables totaux.

**4.** Utilisation selon l'une quelconque des revendications 1 à 3, dans laquelle l'adsorbant de substances hydrophobes a un volume moyen de pores de 0,0001 à 0,1 ml/g.

**5.** Utilisation selon l'une quelconque des revendications 1 à 3, dans laquelle l'adsorbant de substances hydrophobes a une aire de surface spécifique de 0,01 à 10 $m^2$/g.

**6.** Utilisation selon la revendication 4 ou 5, dans laquelle l'adsorbant de substances hydrophobes a un diamètre moyen des pores de 0,1 à 30 nm.

**7.** Utilisation selon l'une quelconque des revendications 1 à 3, dans laquelle l'adsorbant de substances hydrophobes a un coefficient de variation de la distribution des tailles des particules de 1 à 40.

**8.** Utilisation selon l'une quelconque des revendications 1 à 7, dans laquelle l'agent hormono-actif ou l'hydrocarbure aromatique polycyclique comprend au moins un élément choisi dans l'ensemble constitué des alkylphénols, bisphénol A, esters de l'acide phtalique, dioxines, biphényles polychlorés, oestrogènes et benzo[a]pyrène.

**9.** Utilisation d'un adsorbant de substances hydrophobes telle que définie dans l'une quelconque des revendications 1 à 8 dans un garnissage pour chromatographie liquide pour analyser un agent hormono-actif.

**10.** Utilisation d'un adsorbant de substances hydrophobes telle que définie dans l'une quelconque des revendications 1 à 8 dans un procédé d'analyse d'un agent hormono-actif, en utilisant un appareil de chromatographie liquide constitué d'au moins une pompe d'amenée de liquide, un dispositif d'introduction d'échantillon, une précolonne, une colonne de séparation et un détecteur, ladite précolonne est une colonne garnie de l'adsorbant de substances hydrophobes, et ledit procédé comprend au moins l'étape d'adsorption consistant à injecter un échantillon au moins une fois dans ladite précolonne pour provoquer ainsi l'adsorption dudit agent hormono-actif dans l'échantillon sur ladite précolonne et l'étape de désorption de l'agent hormono-actif adsorbé sur ladite précolonne et d'introduction de la substance dans la colonne de séparation.

Fig. 1

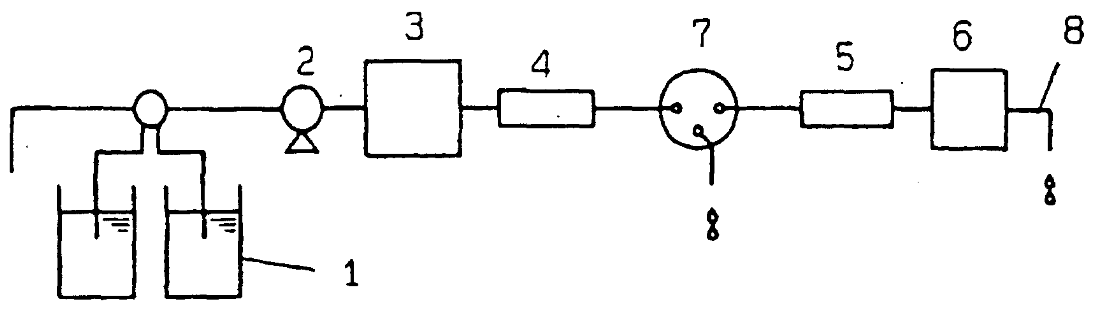


Fig. 2

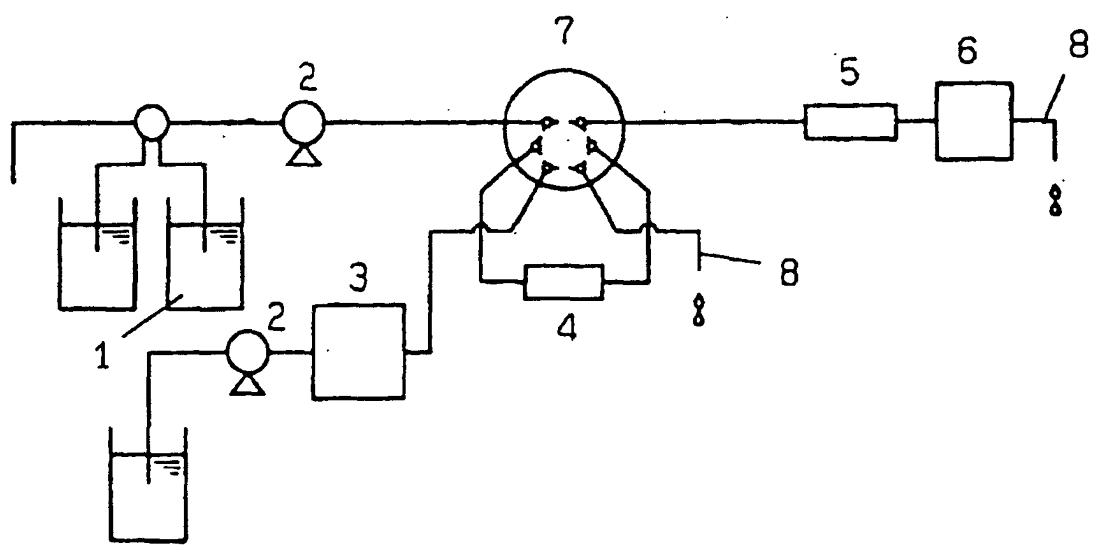

Fig.3

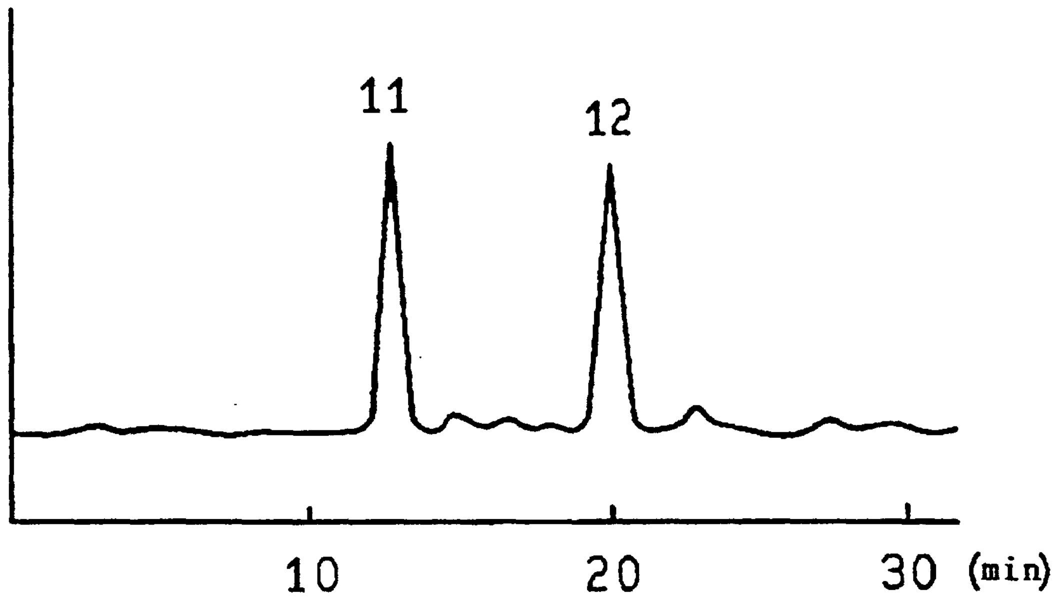


Fig. 4

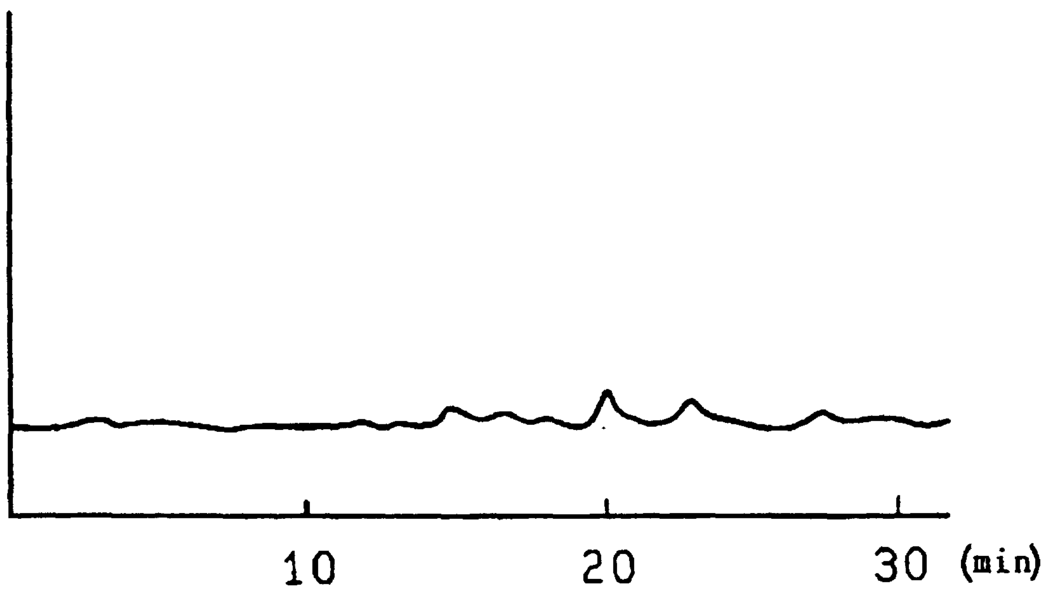

Fig.5

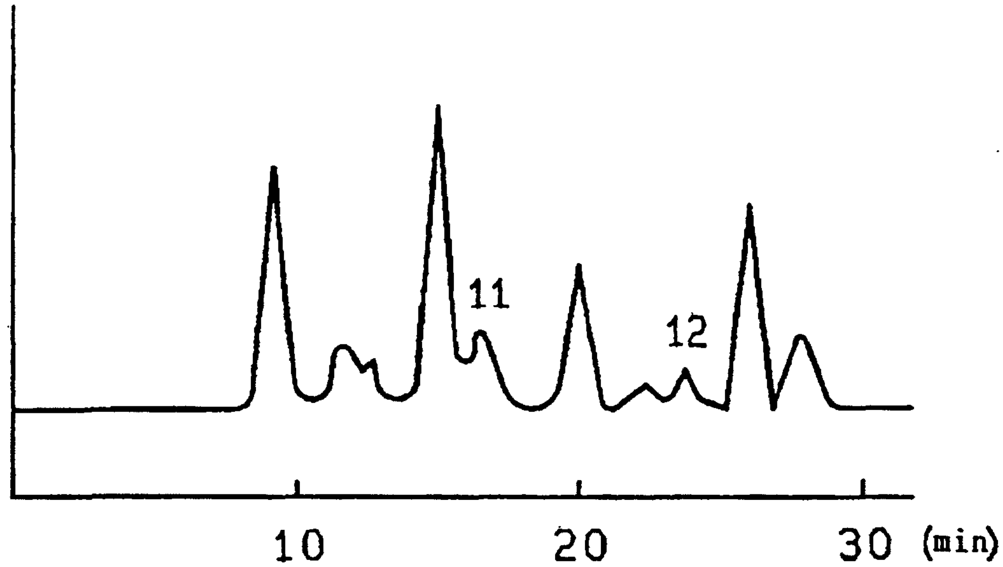


Fig. 6

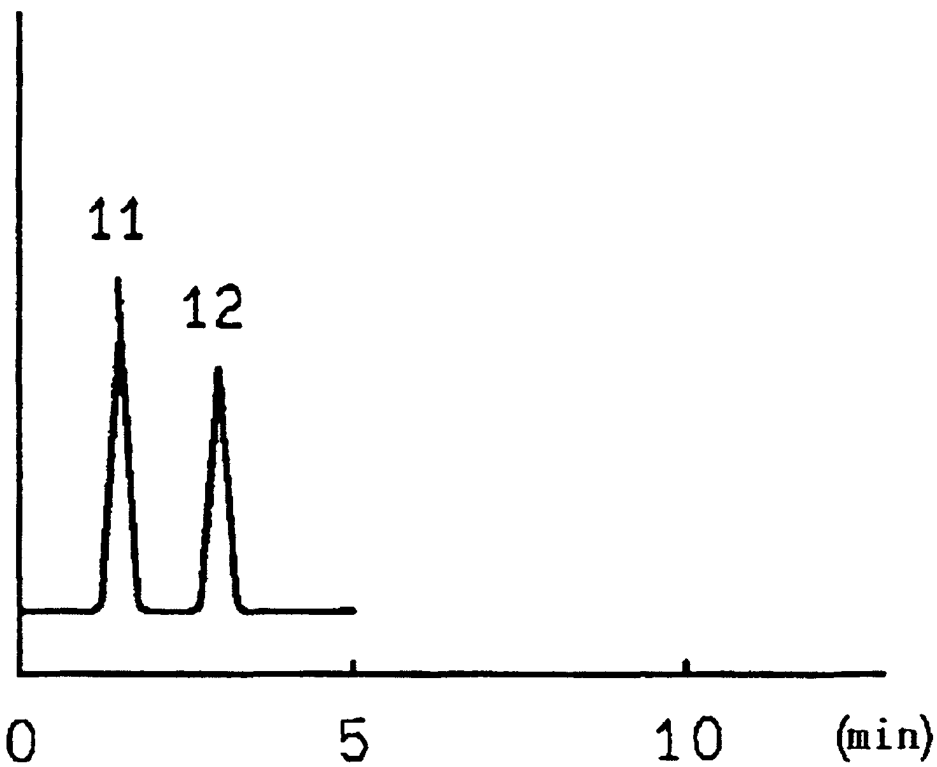

Fig. 7

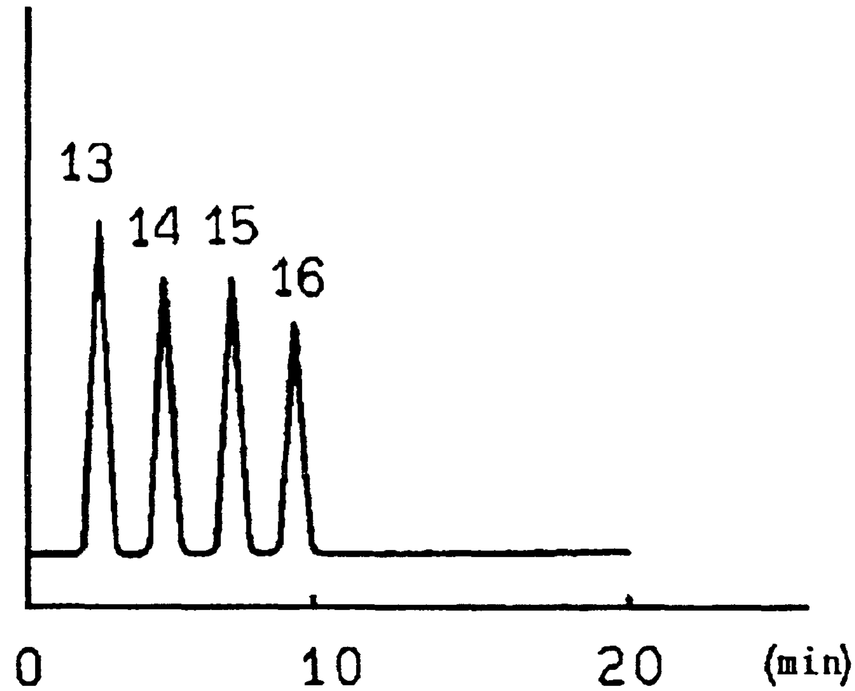


Fig. 8

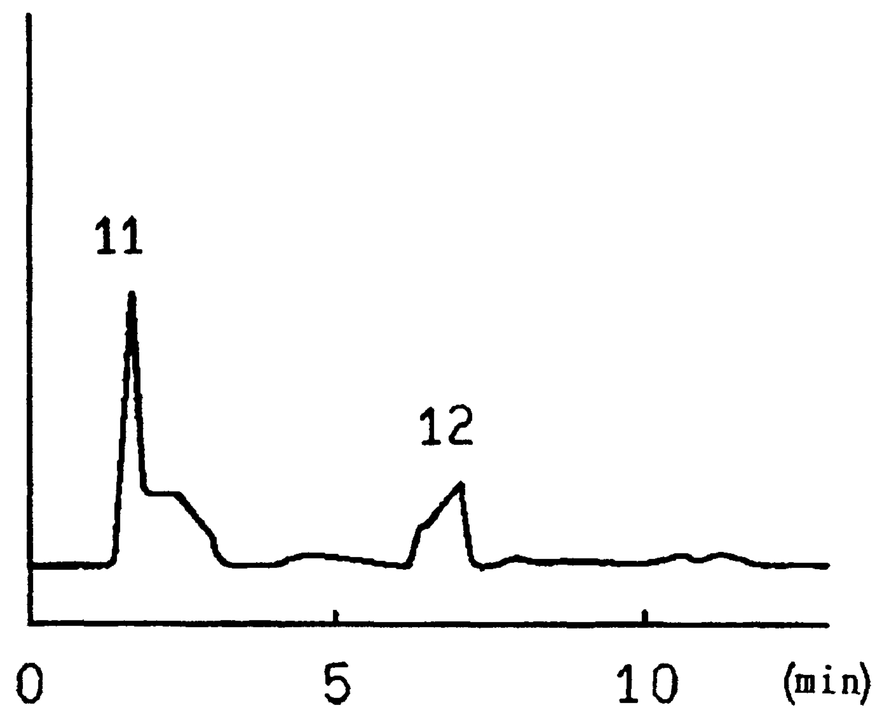

Fig. 9